(19) Europäisches Patentamt
European Patent Office
Office européen des brevets

(11) **EP 2 110 992 A1**

(12) **EUROPEAN PATENT APPLICATION**

(43) Date of publication:
**21.10.2009 Bulletin 2009/43**

(51) Int Cl.:
***H04L 12/24*** *(2006.01)* ***H04L 12/26*** *(2006.01)*
***H04L 12/56*** *(2006.01)*

(21) Application number: **08380117.5**

(22) Date of filing: **17.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
- **Vodafone España, S.A.**
  **28108 Alcobendas (Madrid) (ES)**
- **Fundacio i2CAT, Internet i Innovacio Digital a Catalunya**
  **08034 Barcelona (ES)**

(72) Inventors:
- **Anguera Lazaro, David**
  **Universidad Politecnica de Cataluna**
  **08034 Barcelona (ES)**
- **Hesselbach i Serra, Xavier**
  **Universidad Politecnica de Cataluna**
  **08034 Barcelona (ES)**
- **Gonzalo Gracia, Javier**
  **50010 Zaragoza (ES)**
- **Lopez Morillo, Manuel Julian**
  **19185 - Uceda - Guadalajara (ES)**
- **Caudevilla Laliena, Guillermo**
  **22003 - Huesca (ES)**
- **Garcia Espin, Joan Antoni**
  **08034 Barcelona (ES)**

(74) Representative: **Carvajal y Urquijo, Isabel et al**
**Clarke, Modet & Co.**
**Goya 11**
**28001 Madrid (ES)**

(54) **System and method for monitoring and optimizing traffic in MPLS-diffserv networks**

(57) System for monitoring and optimizing traffic in MPLS-DiffServ networks, the method comprising:
- receiving and executing the Network Element Manager, NEM (7), monitoring instructions from the Network Management System, NMS (6);
- sending the NEM (7) to the NMS (6) QoS parameters retrieved from the router (9);
- analyzing the NEM (7) SNMP events generated in the router (9), sending said analyzed SNMP events to the NMS (6);
- detecting the NEM (7), for each class i supported by the router (9), whether used bandwidth $BW_i$ in a LSP is outside an interval ($BW_{MINi}$ - $BW_{MAXi}$); in that case sending an alarm message to the NMS (6);
- analyzing the NMS (6) the alarm messages from the NEMs (7);
- in case a specific class within a LSP in under/over utilization, modifying the LSP parameters accordingly to adjust them to the current network situation.

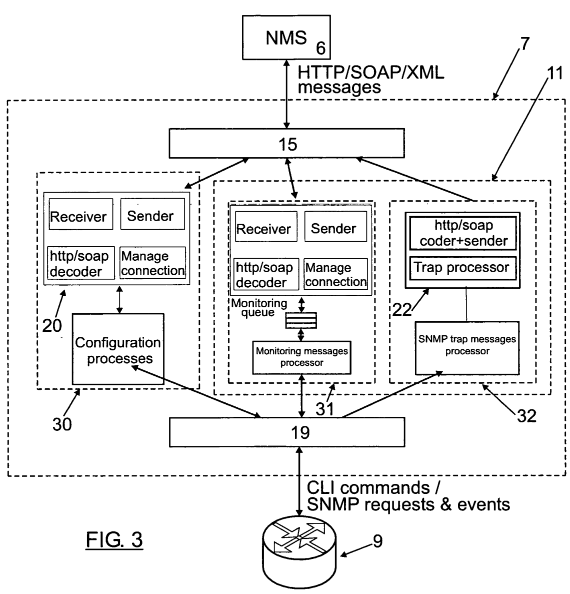


FIG. 3

EP 2 110 992 A1

## Description

Field of the Invention

The present invention is comprised within the field of packet-switched networks. More specifically it refers to a system and method for monitoring and optimizing the real traffic transmitted along a MPLS-Diffserv network, and establishing LSPs (Label Switched Paths).

Background of the Invention

In computer networking and telecommunications, Multi Protocol Label Switching (MPLS) is a data-carrying mechanism that belongs to the family of packet-switched networks. It was designed to provide a unified data-carrying service for both circuit-based clients and packet-switching clients which provide a datagram service model. It can be used to carry many different kinds of traffic, including IP packets, as well as native ATM, SONET, and Ethernet frames.

MPLS works by prefixing packets with an MPLS header, containing one or more 'labels'. This is called a label stack. Each label stack entry contains four fields:

- Label value (20 bits). This label determines the next hop of the packet.
- EXP (3 bits), experimental MPLS field, typically used for indicating the QoS (Quality of Service) of the packet. If this field is properly set, it is possible to differentiate several traffic classes, with a maximum of eight.
- Stack (1 bit). If this is set, it signifies that the current label is the last in the stack.
- TTL (8 bits). A field to determine the "time to live" for the packet.

These MPLS-labeled packets are switched after a Label Lookup/Switch instead of a lookup into the IP table.

The entry and exit points of an MPLS network are called Label Edge Routers (LER), which, respectively, push an MPLS label onto the incoming packet and pop it off the outgoing packet. Routers that perform packet switching/ forwarding (MPLS routing) based only on the label are called Label Switch Routers (LSR). In some applications, the packet presented to the LER already may have a label, so that the new LSR pushes a second label onto the packet.

In MPLS networking, a Label Switched Path (LSP) is a path through an MPLS network, set up by a signaling protocol. The path is set up based on criteria in the forwarding equivalence class (FEC).

FEC is a term used in MPLS to describe a set of packets with similar and/or identical characteristics which may be forwarded the same way; that is, they may be bound to the same MPLS label and receive the same Per Hop Behaviour (PHB) within the MPLS domain. Characteristics determining the FEC of a higher-layer packet depend on the configuration of the router, but typically this is at least the destination IP address. Quality of service class is also often used. Thus, a FEC tends to correspond to an LSP. The reverse is not true, however: an LSP may be (and usually is) used for multiple FECs.

The path begins at a Label Edge Router (LER), which makes a decision on which label to prefix to a packet based on the appropriate FEC. It then forwards the packet along to the next router in the path, which swaps the packet's outer label for another label, and forwards it to the next router. The last router in the path removes the label from the packet (label popping) and forwards the packet based on the header of its next layer, for example IPv4. Due to the forwarding of packets through an LSP being opaque to higher network layers, an LSP is also sometimes referred to as an MPLS tunnel.

The router which first prefixes the MPLS header to a packet is called an ingress router. The last router in an LSP, which pops the label from the packet, is called an egress router. Routers in between, which need only swap labels, are called transit routers or Label Switching Routers (LSR).

LSPs are unidirectional; they enable a packet to be label switched through the MPLS network from one endpoint to another.

Labels are distributed between LERs and LSRs using the Label Distribution Protocol (LDP). LSRs in an MPLS network regularly exchange label and reachability information with each other using standardized protocols in order to build a complete picture of the network they can then use to forward packets. The most typically used protocol is the so called Open Shortest Path First (OSPF), which follows a Dijkstra algorithm to find the shortest path within the MPLS domain that connects the desired nodes. LSPs are established by the network operator for a variety of purposes, such as to create network-based IP Virtual Private Networks or to route traffic along specified paths through the network.

When an unlabeled packet enters the ingress router and needs to be passed on to an MPLS tunnel, the router first determines the FEC the packet should be in, and then inserts one or more labels in the packet's newly-created MPLS header. The packet is then passed on to the next hop router for this tunnel.

When a labeled packet is received by an MPLS router, the topmost label is examined. Based on the contents of the label a swap, push (impose) or pop (dispose) operation can be performed on the packet's label stack. Routers can have prebuilt lookup tables that tell them which kind of operation to do based on the topmost label of the incoming packet so they can process the packet very quickly.

In a swap operation the label is swapped with a new label, and the packet is forwarded along the path associated with the new label. In a push operation a new label is pushed on top of the existing label, effectively "encapsulating" the packet in another layer of MPLS. This allows hierarchical routing of MPLS packets. Notably, this is used by MPLS VPNs. In a pop operation the label is removed from the packet, which may reveal an inner label below. This process is called "decapsulation". If the popped label was the last on the label stack, the packet "leaves" the MPLS tunnel. This is usually done by the egress router.

During these operations, the contents of the packet below the MPLS Label stack are not examined. Indeed transit routers typically need only to examine the topmost label on the stack. The forwarding of the packet is done based on the contents of the labels, which allows "protocol-independent packet forwarding" that does not need to look at a protocol-dependent routing table and avoids the expensive IP longest prefix match at each hop.

At the egress router, when the last label has been popped, only the payload remains. This can be an IP packet, or any of a number of other kinds of payload packet. The egress router must therefore have routing information for the packet's payload, since it must forward it without the help of label lookup tables. An MPLS transit router has no such requirement.

In some special cases, the last label can also be popped off at the penultimate hop (the hop before the egress router). This is called Penultimate Hop Popping (PHP). This may be interesting in cases where the egress router has lots of packets leaving MPLS tunnels, and thus spends inordinate amounts of CPU time on this. By using PHP, transit routers connected directly to this egress router effectively offload it, by popping the last label themselves.

MPLS can make use of existing ATM network infrastructure, as its labeled flows can be mapped to ATM virtual circuit identifiers, and vice versa.

MPLS-Diffserv architecture is being used more and more in order to configure the IP data transmission networks. There are many tunnels defined along MPLS-Diffserv networks in order to allocate resources to guarantee QoS. These tunnels must be sized per class based on the predicted traffic, but sometimes this kind of prediction is very difficult to do, especially in networks that work in a changing environment like mobile operators. There is a need to find a system to optimize the resource allocation dynamically depending on the real traffic.

There are several commercial solutions for configuring MPLS networks, such as "MPLS Tunnel Builder", "CISCO IP Solution Center, Traffic Engineering Module", "IBM Netcool Suite". However, none of them implement a Background Monitoring System (BMS) integrated in a MPLS-Diffserv network management tool. Unlike said commercial solutions, the present invention defines a Dynamic Resource Allocation (DRA) method, defines a route marker method (and therefore a load balancing method), implements a LSP Legalization method, implements a Background Monitoring System, improves the routing method, implements Connection Admission Control (CAC) method and implements off-line and on-line path validation.

The present invention allows the client to create tunnels for IP traffic guaranteeing QoS per traffic class, and what is really important is that it allows the client to monitor the real traffic per class that is sent from one customer network towards another and resize the configuration for each traffic class within the tunnels.

The present invention also resizes the resource allocation made for each class for each MPLS tunnel optimizing much more the resources.

The present invention also determines whether when a resize should be made:

- When the system detects that a threshold has been exceeded.
- When new tunnel with higher priority requires the resources that are already being used, so the new traffic takes resources that were used by other traffic.
- When there are not enough resources for the traffic of a specific class of a new tunnel, and the system reallocates resources that were not provisioned for that class temporally, till new tunnel requires them. So the system optimizes the network resources for different class of traffic whatever the initial distribution for each traffic class.
- When due to a deletion/modification of a tunnel there are some resources freed up. This could allow the system to allocate the proper resources to traffic of one class that was provisioned using resources reserved for other class previously.

Therefore, the present system monitors the real traffic transmitted along a MPLS-Diffserv system detecting if a tunnel is overloaded or underloaded for one of its classes. If it is, then the system can be reconfigured to optimize the resource allocation for that class within the tunnel.

In case there is some problem (overloading or underloading), the present invention can change the allocation of bandwidth in the nodes to resize the resource allocation; and also can change the queue length of the routers to optimize the resource allocation not only in terms of bandwidth but also in terms of other QoS parameters like delay, packet loss and jitter.

The present invention also includes an optimized routing method, a method for obtaining and validating an optimized route in MPLS-DiffServ networks. Regarding existing routing protocols, plain IGP (Interior Gateway Protocol) routing protocols (such as OSPF or IS-IS) are not optimum for packet transmission because calculate only shortest path for destination (they do not take account of traffic requirements and network condition such as remaining bandwidths of links). When TE (Traffic Enginnering) is required to establish LSPs with guaranteed QoS characteristics, the traffic engineering (TE) extensions to these protocols have to be used. These extensions distribute QoS and Shared Risk Link Groups (SRLGs) information on each link in the network. This information enables the route calculator to determine routes through the network with guaranteed QoS parameters, and backup LSPs that traverse different links from the primary path.

Later a brief explanation about the most common routing protocols supporting TE is given:

- OSPF-TE: the current OSPF protocol is not adequate for TE because the limited amount of information distributed by native OSPF is optimized for shortest path routing but insufficient for TE routing calculation; for instance, in a typical OSPF network, congestion frequently occurs when:

    1. The shortest paths of multiple traffic streams converge on specific links or interfaces
    2. A given traffic stream is routed through a router interface that does not have sufficient link or processing resources to guarantee minimum bandwidth, maximum delay, and so on.

So extensions to OSPF are proposed in order to allow nodes to exchange information about network topology, resource availability and policies. This information can he used by the constraint-based routing algorithms to compute best paths subject to specified resource and policy constraints. One operational scenario is to use OSPF-TE to compute best paths in a network, then using MPLS in conjunction with a signalling protocol such as (RSVP- TE) to "pin down" TE paths, or tunnels, across the IP network.

**[0029]** - Constrained-based shortest path first (CSPF) routing algorithm can calculate shortest paths that do not violate a set of constraints (for instance, when a bandwidth constraint is given for a path between source and destination, the CSPF first removes links that have remaining bandwidth less than the bandwidth constraint and then calculates the shortest path). But CSPF does not take into account the different requirements for each class within the tunnel such as different bandwidths, delays, jitters or packet losses. Therefore, CSFP will provide a route that fits a global set of constraints, but is definitely not providing a route which takes into account the different QoS constraints (such as delay or jitter, among others), so end-to-end QoS per class is not fully assured in the calculated route.

The present invention achieves cost reduction optimizing the resource allocation within the own MPLS-Diffserv IP network. Besides, it reduces the time to reconfigure the IP network when traffic distribution changes since this process is automated.

It is well-known that abbreviations and acronyms are frequently used in the computer science field, and more specifically in the packet-switched networks field. Below is a glossary of acronyms/terms used throughout the present specification:

| | |
|---|---|
| ATM | Asynchronous Transfer Mode |
| BW | Bandwidth |
| CAC | Connection Admission Control |
| CoS | Class Of Service |
| CLI | Command Line Instructions |
| DiffServ | Differentiated Services |
| DRA | Dynamic Resource Allocation |
| FEC | Forwarding Equivalence Class |
| LDP | Label Distribution Protocol |
| LER | Label Edge Router |
| LLQ | Low Latency Queuing |
| LSP | Label Switched Path |
| LSR | Label Switch Router |
| MIB | Management Information Base |
| MPLS | Multi Protocol Label Switching |
| NEM | Network Element Manager |
| NMS | Network Management System |
| QoS | Quality Of Service |
| RMON | Remote Network Monitoring |
| SNMP | Simple Network Management Protocol |

Description of the Invention

The invention relates to a system and method for monitoring and optimizing traffic in MPLS-DiffServ networks according to claim 1 and claim 5, respectively. Preferred embodiments of the system and of the method are defined in the dependent claims. The present invention also relates to a method for obtaining and validating an optimized route in MPLS-DiffServ networks according to claim 7 and a route marker process for marking validated LSPs in MPLS-DiffServ networks according to claim 12.

Regarding the system for monitoring and optimizing traffic in MPLS-DiffServ networks, the networks comprises:

- a plurality of routers, being said routers either LER or LSR;
- a Network Management System, NMS, configured for controlling the MPLS-DiffServ network;
- a plurality of Network Element Managers, NEMs, each NEM configured for managing the communication with at least one router;
- a Graphical User Interface, GUI, to interact with the NMS and configure the system.

Each NEM comprises:

- a dispatcher configured for:
  - analyzing the messages received from the NMS and distributing them to either a configuration module or a monitoring module according to the type of message;
  - sending back messages with information from the router to the NMS;
- the configuration module for each router managed by the NEM, for configuring said router and obtaining its configuration;
- a BMS-NEM module for each router managed by the NEM, comprising:
  - the monitoring module configured for:
    - receiving and executing monitoring instructions from the NMS;
    - retrieving, from the router managed by the NEM, information relating to traffic data and QoS parameters and sending said information to the dispatcher;
  - an alarm module for receiving and analyzing SNMP events generated internally in the router, and sending said analyzed SNMP events to the dispatcher.

Each NEM is configured to detect, for each class i supported by the router, whether used bandwidth $BW_i$ for said class i in a LSP is below a minimum threshold $BW_{MINi}$ for said class i, and/or used bandwidth $BW_i$ is over a maximum threshold $BW_{MAXi}$ for said class i; and in that case send an alarm message to the NMS to notify the alarm situation.

The NMS comprises:

- an alarm module configured for receiving and analyzing the alarm messages from the NEMs;
- an auto-provisioning module configured for, in case a specific class within a LSP in under/over utilization, modifying the LSP parameters accordingly to adjust them to the present network situation.

Each NEM is preferably additionally configured for checking the state of all the links used by the LSPs and, in case a NEM detects that at least one link of a LSP is unavailable, notifying the NMS that said LSP needs to be re-routed. The NMS can additionally comprise an auto-rerouting module configured for, in case the NEM alerts the NMS that a specific link of a LSP is unavailable, rerouting said LSP to get to the destination.

The monitoring module preferably comprises:

- a monitoring thread configured for sending and receiving data to/from the dispatcher;
- a monitoring queue for storing monitoring messages from the NMS and from the router;
- a monitoring messages processor configured for executing the monitoring requests and retrieving from the router a set of statistics about traffic to be sent to the NMS.

The alarm module preferably comprises an alarm thread comprising:

- a SNMP trap event processor for decoding and translating SNMP events generated in the router;
- encoding and sending means for encoding and sending messages to the NMS through the dispatcher.

Method for monitoring and optimizing traffic in MPLS-DiffServ networks is also object of the present invention. The method comprises:

- receiving and executing the NEM monitoring instructions from the NMS;
- retrieving the NEM, from the router managed by the NEM, information relating to traffic data and QoS parameters and sending said information to the NMS;
- receiving and analyzing the NEM SNMP events generated internally in the router, and sending said analyzed SNMP events to the NMS;
- detecting the NEM, for each class i supported by the router, whether used bandwidth $BW_i$ for said class i in a LSP is below a minimum threshold $BW_{MINi}$ for said class i, and/or used bandwidth $BW_i$ is over a maximum threshold $BW_{MAXi}$ for said class i; and in that case send an alarm message to the NMS to notify the alarm situation;
- receiving and analyzing the NMS the alarm messages from the NEMs;
- in case a specific class within a LSP in under/over utilization, modifying the LSP parameters accordingly to adjust them to the present network situation.

The method can additionally comprise:

- checking each NEM the state of all the links used by the LSPs and, in case a NEM detects that at least one link of a LSP is unavailable, notifying the NMS that said LSP needs to be re-routed;
- in case the NEM alerts the NMS that a specific link of a LSP is unavailable, rerouting the NMS said LSP to get to the destination.

A method for obtaining and validating an optimized route in MPLS-DiffServ networks is also object of the present invention, said route being established between an origin node and a destination node. The method comprises:

a- obtaining a route R between the origin and the destination and, at the same time as the route between the origin node and the destination node is being obtained, validating the QoS requirements link by link of said route, said validation process comprising, for each node N to be validated and until said node N is the last node of the route R the following steps:

a1 • evaluating if said node fulfils the bandwidth BW requirements for each class;

- in case the BW requirements are not fulfilled:

a2- optionally including a BW improvement process;
a3- in case the BW requirements are not finally fulfilled, going to step b);

- in case the BW requirements are fulfilled:

a4• evaluating if said node fulfils the delay, jitter and packet loss requirements, by using the cumulative delay $Delay_{[N-1]}$, the cumulative jitter $Jitter_{[N-1]}$ and the cumulative packet loss $PacketLoss_{[N-1]}$ obtained in the route until the current node N;

- in case any of the delay, jitter and packet loss requirements are not fulfilled:

a5- optionally including an adjustment process for adjusting the delay, jitter and packet loss;
a6• obtaining the cumulative delay, $Delay_N$, the cumulative jitter, $Jitter_N$, and the cumulative packet loss, $PacketLoss_N$, obtained in the route until the node N;

b- checking if route R is the last possible route between the origin and the destination, and if it is not the last one going to step a);
c- checking if there is at least one route that fulfils all the QoS requirements;
e- deciding the most suitable route.

The method can further comprise:

- in case in step c) it has been checked that no route fulfills all the QoS requirements, applying an adjustment process for adjusting the delay, jitter and packet loss for those routes fulfilling the BW requirements.

The method preferably comprises, previous to step e), a route marker process (d) for marking LSPs and helping in the decision.

The adjustment process for adjusting the delay, jitter and packet loss in step a5) preferably comprises a Dynamic Resource Allocation DRA method.

The BW improvement process of step a2) preferably comprises:

- applying a DRA method to said node;
- in case the BW requirements are not fulfilled yet, dropping a LSP with lower priority;
- in case the BW requirements are not fulfilled yet, dropping a squatter LSP, a squatter LSP being a LSP which had not enough BW for any of its classes but has acquired or squatted free BW of the immediately higher class of service;
- in case the BW requirements are not fulfilled yet, creating the LSP as squatter.

A route marker process for marking validated LSPs in MPLS-DiffServ networks is also object of the present invention. said marking being done according with different N parameters $P_i$, each parameter being in the range [0-10], value 0 for the worst note and $V_{MAX}$ for the best note, and each one of those parameters $P_i$ being assigned a weight $w_i$ such that $\sum_{i=1}^{N} w_i = 1$;

The formula to compute the mark M is $M = \sum_{i=1}^{N} w_i \cdot P_i$; said parameters $P_i$ including at least one of the following:

- Cost of deleting an existing LSP, being computed as follows:
  - starting with X=10;
  - for each dropped LSP, subtracting 1 from X;
  - computing $P_i$ as $P_i$=max(0,X);
- CPU load in the routers, being computed as follows: .
  - for each router j along the path, $CPU_j$=100-%$CPU_j$, being %$CPU_j$ the monitored value);
  - computing mean value among all routers:

$$P_i = \frac{\sum_{j=1}^{N_R} CPU_j}{N_R},$$

  being $N_R$ the number of routers along the LSP;
- The number of nodes and links in the LSP, being computed as follows:
  - starting with X=10;
  - for each hop in the LSP, subtracting 1 from X;
  - computing $P_i$ as $P_i$=max(0,X);
- Penalty if the new LSP has to be created as squatter, a squatter LSP being a LSP which had not enough BW for any of its classes but has acquired or squatted free BW of the immediately higher class of service:
  - starting with X=10;
  - at each hop for each class established as squatter, subtracting 1 from X;
  - computing $P_i$ as $P_i$=max(0,X);

- Delay values along the path:
  - for each class j and for each interface m:
    - o computing Rj as:

$$R_j = \frac{est_j}{QoS_req_j} \cdot 10$$

being $est_j$ the estimated delay value; ○ $N_j$=10-$R_j$;

○ computing mean value among all classes:

$$R_m = \frac{\sum_{j=1}^{N_{CoS}} R_j}{N_{CoS}} ,$$

being $N_{Cos}$ the number of CoS carried by the LSP;

  - computing mean value among all interfaces:

$$P_i = \frac{\sum_{m=1}^{N_R} R_m}{N_R} ;$$

being $N_R$ the number of interfaces along the LSP;

- Packet loss values along the path, being computed the same way as the delay values along the path;
- Available bandwidth after creating the LSP, being computed as follows:
  - for each class j:

○ computing the minimum available bandwidth ($min_avbw_j$) along the path, so that each class $min_avbw_j$ is the bottleneck bandwidth;
○ computing $R_j$ as:

$$R_j = \frac{\min_avbw_j}{org_bw_j} \cdot 10$$

○ computing mean value among all classes:

$$P_i = \frac{\sum_{j=1}^{N_{CoS}} R_j}{N_{CoS}} ,$$

being $N_{Cos}$ the number of CoS carried by the LSP;

- Security of the router, to represent the importance of routers added to the network, being computed as follows:

  - for each router of the network, the operator assigns a value Rj between 0-10 indicating its importance in the network;
  - computing mean value among all routers of the LSP:

$$P_i = \frac{\sum_{j=1}^{N_R} R_j}{N_R} ,$$

being $N_R$ the number of routers along the LSP.

Brief Description of the Drawings

A series of drawings which aid in better understanding the invention and which are expressly related with an embodiment of said invention, presented as a non-limiting example thereof, are very briefly described below.

Figure 1 shows an example of a MPLS network according to the known state of the art.
Figure 2 shows a diagram of the basic BMS architecture according to the invention.
Figure 3 shows the structure of the BMS-NEM module, one of the modules of the present invention.
Figures 4A, 4B and 4C show different kind of detections of LSP under/over utilization in a router of the MPLS network.
Figure 5 shows a diagram of the BMS, including BMS-NMS module.
Figures 6A and 6B shows block diagrams of the routing method and validation according to the invention, respectively.
Figure 7 shows the routing method diagram according to the present invention.
Figure 8 shows the relationship between QoS and route marker parameters.
Figure 9A and 9B show a model for ERA method.
Figure 10A and 10B show the analytical model of DRA method.
Figure 11 shows schematically the different cases where the method for establishing and validating or legalizing LSPs can be implemented.
Figures 12 to 16 shows different cases where the legalization method can be applied.
Figure 17 shows the message structure used in GUI-NMS-NEM interfaces.

Description of a Preferred Embodiment of the Invention

The present invention is applied on MPLS networks. **Figure 1** shows an example of an MPLS network 1 where the LER 2 and LSR 3, nodes of the MPLS network 1, are shown.
In order to assure better link utilization, the background monitoring system (BMS) the present invention proposes will check the occupation of selected LSP's, that is, it will check the operation of tunnels within MPLS networks in order to detect under/over utilization.
As it is shown in **Figure 2**, the BMS comprises two different modules: a BMS-NMS module 10 within the Network Management System, NMS 6, and a BMS-NEM module 11 within each NEM 7 (Network Element Manager). The NEM 7 manages and configures the communication with the network elements (with the different routers), in particular controlling the performance, monitoring and alarm processes. Those modules are, in fact, new threads, running independently from other configuration or alarm processes, thus not affecting the rest of NMS 6 or NEM 7 functions.
If the current traffic bandwidth for a class exceeds a certain value, the BMS-NEM module 11 within the NEM 7 will warn the NMS 6. Then, the BMS-NMS module 10 within the NMS 6 will suggest a modification of LSP parameters, assuring that the LSP fits to current incoming traffic, and thus improving MPLS network performance.
The BMS is no longer an independent module but an integrated one within NMS 6 and NEM 7. The diagram shows BMS basic operation:

- A NEM 7 detects that a certain class of a certain LSP is in under/over utilization. This detection can be done in three different ways:

  - While creating the LSP, the NEM 7 has configured several Remote. Network Monitoring (RMON) alarms in the router 9, which can be a LER 2 or a LSR 3. Hence, the router 9 warns the NEM 7 automatically.
  - While creating the LSP, the NEM 7 has stored the classes to be monitored. Then, the NEM 7 asks periodically the router 9 about the utilization of those classes in the LSP.

- Periodically, the NEM 7 executes certain Command Line Instructions (CLI) commands via Telnet to query LSP use and class occupation. The router 9 will return some text strings that will have to be processed by the NEM 7.

- When BMS-NEM module 11 within the NEM 7 detects the under/over utilization of the LSP, generates and sends a XML message to warn the NMS 6.
- The NMS 6 suggests a modification of the LSP to fulfil current requirements through auto-provisioning or auto-rerouting methods.

BMS includes a Graphical User Interface, GUI 8, to interact with the NMS 6 and to configure the different parameters of the monitoring system.

In order to include the BMS-NEM module 11 inside the NEM 7 structure without affecting its operation, the solution shown in **Figure 3** is proposed.

In the NMS-NEM interface, the proposed BMS design follows the model of a non-blocking server with a dispatcher 15 that follows a Singleton pattern (used in Java to allow only one object to be created and the rest of elements in the system make instantiations to this unique dispatcher) for each type of message. This dispatcher 15, also called server, waits for the arrival of new messages from the NMS 6. Once the NEM 7 has been initialised, that is, all its internal components do have a ready status for operating both with the NMS 6 and the router 9, when the dispatcher 15 receives a message, it sets the message to the proper queue, either in the configuration thread 20 of the configuration module 30, or in the monitoring thread 21, or in the alarm thread 22. The dispatcher has been instantiated or created previously so when trying to process new messages the instantiation time is saved.

The configuration module 30 and all its associated logics have the responsibility of performing any required information setting/getting requests to the router 9 that the NMS 6 may ask to do. The monitoring module 31 and all its associated logics have the responsibility of getting all the monitoring information the NMS 6 may need about the traffic data and QoS parameters. The monitoring queue 17 is needed for assuring each monitoring requests are served sequentially, as the access to the router 9 for monitoring purposes must be performed in mutual exclusion to avoid spurious data in the router responses. The monitoring messages processor 18 implements an advanced router CLI response parser.

When a new command has to be configured in the router 9, the NMS 6 will send an HTTP/SOAP/XML message to the NEM 7. The dispatcher 15 will resolve its kind as configuration message and let the configuration module 30 serve the message. Identical process happens when monitoring message is detected to have come from NMS 6 in the dispatcher 15 of the NEM 7.

The monitoring module 31 and its logics are only one part of the BMS-NEM module 11. The other part completing the BMS-NEM module 11 is the alarm module 32, which comprises an alarm thread. This alarm thread implements an advanced Simple Network Management Protocol (SNMP) trap event processor to decode and translate SNMP events generated internally in the router 9 (because it has previously been configured to do so with a set of Remote Network Monitoring (RMON) configuration commands asked to be configured by the NMS 6). The communication between router 9 and NMS 6 via this alarm module 32 in the NEM 7 is unidirectional, from router 9 to NMS 6. At this point, it must be said that the solution differs depending on router 9 capabilities. That is to say, if RMON alarms can be configured in the router 9 to monitor LSP utilization values per class, the NEM 7 will just have to wait for those alarms. On the contrary, if the monitoring has to be done by means of a periodical polling mechanism, either polling via SNMP requests or CLI command request/response parsing, it is performed by the monitoring module 31, which means the monitoring messages processor 18 to get those values by using the router-specific communication module 19. This module 19 adapts all the requests and responses in any protocol to a semantics which are understandable by the router.

**Figure 4A** shows the first case, using RMON alarms. NEM 7 configures RMON protocol in the router, setting two kinds of alarms: whether used bandwidth for a class in a LSP is below a minimum threshold $BW_{MIN}$ or used bandwidth for a class in a LSP is over a maximum threshold $BW_{MAX}$. Then, while used bandwidth BW keeps inside the desired, interval ($BW_{MIN} < BW < BW_{MAX}$), no alarm is generated. Eventually, if used bandwidth BW exceeds the limits, an alarm is triggered. Thus, the BMS-NEM module 11 in the NEM 7 has to generate the appropriate XML message to notify the NMS 6.

In the second case, shown in **Figure 4B,** the NEM 7 has to poll the router 9 periodically. This is done by sending SNMP requests, which will read some router Management Information Bases (MIBs). Then, the BMS-NEM module 11 in the NEM 7 has to check the values contained within the SNMP response. If the measured value is inside the desired interval, no action is performed. Otherwise, the NEM has to generate the appropriate XML message to notify the NMS.

In the latest option, shown in **Figure 4C**, the NEM 11 opens a Telnet session with the router 9. Then, the monitoring module 31 executes CLI commands, capturing responses from the router 9. The responses will be parsed by the NEM 7 to extract the desired bandwidth occupation values. The obtained value is then compared with the thresholds in order to trigger the alarm procedure or not.

In the first option the router 9 checks the bandwidth automatically, whereas in the last two options, the BMS-NME module 11 has to do it.

In addition, some others alarms can be configured and monitored. An interesting one will be to check the current state of all the links the tunnel uses. If the NEM 7 detects that one or more of them are unavailable, it will have to notify the NMS 6 that the LSP needs to be re-routed.

Finally, there is a procedure to both generate and manage the alarms depending on the polling method. If the NEM is requesting class bandwidth via SNMP, it will proceed this way:

- request class occupation bandwidth per LSP once each n seconds;
- calculate class occupation average each m seconds;
- if the average is over the maximum or under the minimum, the NEM will generate the corresponding alarm message to alert the NMS 6.

On the contrary, if RMON alarms are generated each time the occupation bandwidth is under the minimum or over the maximum, the NEM will send a XML message for each RMON alarm. In both cases, the NEM will need to store the threshold values for all monitored classes, in order to restart the monitoring procedure after eventual NEM rebooting.

In order not to modify the NMS 6 current architecture, the BMS will be integrated within the NMS alarm module 40. BMS will generate LSP modifications according to NEM alarms. Furthermore, NMS-NEM interface will not be affected much, as many of the existing messages will be reused. The 'LSPCreation' message is modified in order to tell the NEM which classes within a tunnel are intended to be monitored. In addition, the user configures if he lets the system modify the tunnels automatically, with no notification message, or wants to receive a notification every time a LSP is modified. The modified 'LSPCreation' message as well as the new messages are explained below.

In order to generate LSP modifications, BMS comprises two modules:

- Auto-provisioning module 41: when the router/NEM alerts that a specific class within a LSP is under/over utilization the NMS has to modify the LSP parameters to adjust them to the present network situation. The auto-provisioning module 41 will indicate the NEM 7, through a 'LSPModification' message, to modify the LSP and the cause of such modification (the class is under or over utilisation). Then, the algorithm will try to modify LSP parameters regarding class occupation. The method needs to know what causes the modification. If the class is underutilisation, the algorithm will try to reduce reserved bandwidth for that class. On the contrary, if the class is overutilisation, the algorithm will try to increase reserved bandwidth.
- Auto-rerouting module 42: when the router/NEM alerts that a specific link, which is being used by a monitored tunnel, is unavailable, the NMS has to reroute the LSP to try to get to the destination. Basically, the NMS has to proceed the same way as before but invoking LSP rerouting instead of LSP modification.

Finally, it will be necessary to create a new message to notify monitoring parameters from NMS to NEM in case the latest one need to be restarted. This message will contain the threshold values of all monitored classes.

In order to support BMS operation some messages are created or modified (the different fields of said messages are shown in different tables, Table 1 to Table 5, at the end of the description):

In the GUI-NMS interface: the 'LSPCreation' message. By using this message the GUI indicates NMS to accomplish a LSP creation and provides with all necessary involved data. In **Table 1** below the different fields of said message are shown.

In the NMS-NEM interface: the 'LSPRoute' message (**Table 2**), the 'Filter' message (**Table 3**), the 'SetAlarm' message (**Table 4**), and the 'TrapNotification' message (**Table 5).**

The 'LSPRoute' message can be used to:

- Create a new LSP in router in order to obtain the route from routing protocol. NMS requests ingress edge NEM to create LSP in disabled state in order to obtain route given by routing protocol or to check that explicit route is possible. The opposite LSP will be created with explicit route given from NMS.
- Modify the route of an existing LSP. NMS indicates NEM to modify LSP route. So first, NEM creates the LSP with explicit route or implicitly in disabled state and with affinity new or the same as before values. NEM answers with route if it was implicit and if process has been successful. Then route is verified with CAC (Connection Admission Control) algorithm. LSP then deletes the old LSP. Queue modification and service BW could be modified before the LSP is enabled if it is required by CAC algorithm

As for the 'Filter' message, this message is used to create/modify/delete traffic filter. NMS indicates NEM the data traffic to be transported by LSP. NEM could then define in Router the corresponding access lists and create route map to redirect traffic classified with ACL's to the LSP and finally apply the route map on the appropriate LER input interfaces.

Relating to the 'SetAlarm' message, the NMS will use this message to recover the monitoring system after NEM disconnection. Thus, all the information about bandwidth thresholds of monitored classes will be included. In addition, the NMS will send this message after the 'Filter' message, to configure monitored classes for the first time.

As for the 'TrapNotification' message, NEM provides NMS with trap received from Router. Some new error codes, BMS Codes (8xx), can be added:

- 801: Class utilisation under minimum threshold.
- 802: Class utilisation over maximum threshold.
- 803: Link unavailable (re-routing required).

To sum up, the NMS will send a monitoring message to the NEM with the parameters to monitor and a minimum and maximum threshold. Then, the NEM will receive monitored data from the router and if it detect that any threshold is reached, it will send a Trap to the NMS.

As the main target of BMS is to detect if the BW of a class in a LSP is being underused or overused, the thresholds could be a percent below the assigned BW. The maximum threshold will be a percent a bit below of the assigned bandwidth in order to act before the assigned bandwidth can be exceeded. The minimum threshold will be a percent of the assigned bandwidth lower than the maximum one.

It is also object of invention an improved routing method. It is desirable to integrate routing method and validation in the same process in order to make faster the whole process. In order to optimize the mechanism to find a route between the origin and destination nodes and then validate it, it is proposed to divide the current CAC Algorithm in as many methods as QoS parameters to validate. That is, a method for Bandwidth validation, a method for Delay validation, a method for Jitter validation and a method for Packet Loss validation. With this approach, when it is detected that a parameter doesn't fulfil the required level, the route is directly rejected and many calculations are saved.

At the moment, the procedure to obtain the routes that fulfils the QoS requirements consists in two steps:

1. The NMS invokes the routing method to get the nodes that makes up the route from the origin to the destination. All the possible routes make up the Potential Routes Vector.
2. For each route included in the Potential Routes Vector, the NMS invokes the CAC Algorithm to validate it. The final result will be the Compliant Routes Vector that includes those routes that fulfils the QoS requirements.

Those steps are shown in the block diagram of **Figure 6A.**

With the present invention, the routing method and validation can be improved as shown in the block diagram of **Figure 6B.** Now, instead of waiting to have all the routes to then, validate them, the QoS requirements are validated node by node at the same time as the route between the origin and the destination is being discovered. So, the CAC Algorithm will be invoked link by link and it will return a Step object and the cumulative values of some QoS requirements that have been obtained in the route until the current node. An Step Object represents a certain node interface of the real network. It contains information about the actions (drop squatters or lower priority LSPs, establish the LSP as squatter, modify the queue size of a certain class, or others) that should be taken by the CAC in order to establish the LSP in a given router interface. All this information will be used later to decide the mark of the route. Acting in this way, if in an intermediate node any of the QoS requirements is over, continuing calculating the route until the destination will be a waste of time. The final result will be the Compliant Routes Vector that includes those routes that fulfils the QoS requirements

A route marker can be included as a new field in Compliant Routes Vector and Potential Routes memory objects in NMS and therefore in CompliantRoutes and PotentialRoutes tables. So, when GUI receives the LSPNotifyCompliantRoutes this field can be showed to operator so he has another point to take his decision about the route to choose for a LSP.

Elements to take the decision can be:

- Cost of deleting an existing LSP (Squatter or with a lower priority). A squatter LSP in the present invention is a LSP which has not enough BW for any of its classes but can acquire (squat) BW of the immediately higher class of service (if some is free).
- CPU load in the routers.
- How many nodes and links are in the path.
- Penalty if the new LSP has to be created as Squatter.
- Delay, Jitter and Packet loss values along the path.
- Available bandwidth after creating the LSP.
- Security of the Router: when a new router is added to the network, operator can assign it a value to represent its importance.

A routing method diagram according to the invention is shown in **Figure 7.** Starting from the origin node, a route to reach the destination is searched.

The routing method will work as follows:

- A new route is going to be searched (a).
- A next node is searched and starts its evaluation. If it is the first node of the route, it will be the origin node.
- Bandwidth requirements are evaluated (a1). In this method of the CAC Algorithm, a DRA (Dynamic Resource Allocation) operation can be included, as well as squatter/priority LSP deletion, squatter LSP creation, etc. If these bandwidth requirements cannot be fulfilled (a7), the route is rejected and a new route is searched. Otherwise, validation continues.
- Delay, jitter and packet loss requirements are evaluated (a4). In this method of the CAC Algorithm it is necessary to take in account the cumulated delay, jitter and packet loss of the previous nodes and links. If the cumulated delay, jitter or packet loss until this node is higher than the required one an adjustment process for adjusting the delay, jitter and packet loss can be included, such as a Dynamic Resource Allocation (DRA) method.
- Obtaining and storing (a6) the cumulative delay, $Delay_N$, the cumulative jitter, $Jitter_N$, and the cumulative packet loss, $PacketLoss_N$, obtained in the route. A Step object is created and stored, indicating if the route is compliant or not.
- Checking if this is the last node of the route (a7) and if the route is not BW compliant.. If there are more nodes to validate and the route is BW compliant, the method returns to step (a1) for the next node of the route.
- If it is the last node or it is not BW compliant, the analysis for the route is finished and it is checked whether said route is the last one or not. In case there are more routes left, analyzing the new route, going back to step (a).
- In case it is the last route, checking (c) if there is at least one route that fulfils all the QoS requirements.
- Applying a route marker method (d) to evaluate the different routes.
- Deciding (e) the most suitable route, taking into account the evaluation carried out by the route marker method.

**Figure 8** shows the relationship between QoS and Route Marker parameters in a iteration with the previous one. The required Bandwidth is the only parameter that doesn't depends on the previous nodes. The other parameters (Delay, Jitter, Packet Loss) and the route marker coefficients have some kind of relationship between the value in the current node and the values in the previous one. So, it will be necessary to find a recursive formula that takes this into account for each of them.

The CAC Algorithm validates the incoming new LSPs. A Dynamic Resource Allocation method is deployed for each node in order to optimize the bandwidth allocated for each class according to the real demand.

The present invention adds new functionalities, such as Dynamic Resource Allocation (DRA) in each node, in order to adapt the buffer sizes for each class to the required delays, according to the state of the network and the currently established LSPs.

The DRA permits adaptive traffic distributions. Therefore, bandwidth and queues size in output interfaces for each class can be adapted automatically to meet the requirements.

The delay, jitter and packet loss are calculated on-line according to the real values in the routers and links.

The routes from two end-points are search according two strategies:

- On-line (Active search), see Figure 6B, discarding non-compliant routes 'on the fly' in case that the next hop can not allocate BW enough for the desired class or not compliant one of the following: Aggregated delay (delay accumulation), aggregated jitter or aggregated losses (using the Lee method). If a bandwidth non-compliant node is found, the DRA organizes the internal parameters in the routers. The result of this process is a set of Compliant Routes, or a null.
- Off-line (pre-calculated routes), see Figure 6A, building up a complete end-to-end set of Potential Routes that should be checked in sequence. The result is a set of Compliant Routes.

Once a set of Compliant Routes is provided, a Route Marker module can mark the goodness for each one. This result will be delivered to the GUI, in order to choose the best according to the user criteria.

Other functionalities: squatter LSPs, auto-rerouting (in case network failure such as a router/interface is down, the system must be aware of it automatically) and end-to-end validation measurements, including jitter measurement and validation, packet loss calculated straight from the routers (based on Lee method) and delay, calculated in real time values from the exact queue length in the routers.

Regarding the route marker parameters, for a given LSP CAC algorithm marks each validated path with a certain note according to different parameters. This mark will appear in the GUI, so that the operator takes a decision about which path should be selected according to the most suitable mark. There are different parameters that can be used to take a decision. In order to mark the path, each one of those parameters ($P_i$) is assigned a weight ($w_i$) representing its importance. Assuming N the total number of parameters to be considered, that each parameter is in the range [0-10] and that:

$$\sum_{i=1}^{N} w_i = 1$$

the mark is a value in the range [0-10], being 0 the worst note and 10 the better. The formula to compute the mark is:

$$Mark = \sum_{i=1}^{N} w_i \cdot P_i$$

and each parameter $P_i$ is computed as follows:

- Cost of deleting an existing LSP (Squatter or with a lower priority).
  - Start with N=10;
  - For each dropped LSP, N=N-1;
  - Compute $P_i$ as: $P_i = max(0,N)$
- CPU load in the routers.
  - For each router *j* along the path, $CPU_j$=100-%$CPU_j$, (being %$CPU_j$ the monitored value);
  - Compute mean value among all routers:

$$P_i = \frac{\sum_{j=1}^{N_R} CPU_j}{N_R},$$

*being* $N_R$ = # of *routers along the path*

- How many nodes and links are in the path.
  - Start with N=10;
  - For each hop, N=N-1;
  - Compute $P_i$ as: $P_i$=max($0$,$N$)
- Penalty if the new LSP has to be created as Squatter.
  - Start with N=10;
  - At each hop, for each class established as squatter, N=N-1;
  - Compute $P_i$ as: $P_i = max(0,N)$
- Delay values along the path.
  - For each class *j* and for each interface *m*
    - ✓ $est_j$: estimated value

✓ $QoS_req_j$: requested delay value for class j divided by the total number of interfaces of the path (uniform distribution of the delay)
✓ Compute $R_j$ as:

$$R_j = \frac{est_j}{QoS_req_j} \cdot 10$$

note that Rj will be always a value in the range [0-10], as $est_j$ <= $QoS_req_j$
✓ Nj=10-Rj;
✓ Compute mean value among all classes:

$$R_m = \frac{\sum_{j=1}^{N_{CoS}} R_j}{N_{CoS}},$$

*being $N_{CoS}$ = # of CoS carried by the LSP*

- Compute mean value among all interfaces:

$$P_i = \frac{\sum_{m=1}^{N_R} R_m}{N_R},$$

*being $N_R$ = # of interfaces along the path*

- Packet loss values along the path
    - Same method than delay
- Available bandwidth (avbw) after creating the LSP
    - For each $class_j$

✓ Compute the minimum available bw ($min_avbw_j$) along the path, so for each class $min_avbw_j$ will be the bottleneck bandwidth.
✓ $org_bw_j$ : originally assigned bandwidth per interface for class j
✓ Compute $R_j$ as:

$$R_j = \frac{min_avbw_j}{org_bw_j} \cdot 10$$

✓ Compute mean value among all classes:

$$P_i = \frac{\sum_{j=1}^{N_{CoS}} R_j}{N_{CoS}},$$

*being $N_{Cos}$ = # of CoS carried by the LSP*

- Security of the Router: when a new router is added to the network, operator can assign it a value to represent its importance.
  - For each router of the network, $R_j$ is value between 0-10 assigned by operator.
  - Compute mean value among all routers of the path:

$$P_i = \frac{\sum_{j=1}^{N_R} R_j}{N_R},$$

*being $N_R$ = # of routers along the path*

The DRA (Dynamic Resource Allocation) method is defined to assist the system to adapt the resources to the actual needs in the network in order to enhance performance and throughput, while assuring the required parameters for each contracted connection.

The parameters are the following:

- Input:
  - Network state (link delays, throughputs).
- Output (per class):
  - Allocated flow.
  - Queue length.

A model is shown in **Figure 9A** and **9B.**

Incoming traffic: traffic aggregate of a LSP, having a Poisson distribution:

$\lambda_{IN,TOT}$ <*** es correcto, o debería decir solo $\lambda_{IN,TOT}$ ***> (represents the traffic of all classes carried by the LSP)

Packet Classifier: classifies packets according to their IP Precedence value.

$\mu_{PC}$ = service rate
$(1/\mu_{PC})$ = service time

Condition: $\lambda_{IN,TOT} < \mu_{PC}$ to avoid FIFO queue overflow
Traffic class: traffic forwarded at each queue

$\lambda_{IN,i}$ (for i=1..N) traffic of *class i* carried by the LSP
Note: $\lambda_{IN,1}$ is the most priority class and is enqueued at LLQ queue

Service class rate: $\lambda_{out,i}$, (for i=1..N)
**directly proportional** to the assigned bw to each class

Conditions: $\lambda_{IN,i} < \lambda_{out,i}$, ( for i=1..N) to avoid FIFO queues overflow

The analytical model is shown in **Figures 10A** and **10B.** According to the previous model and taking into account LLQ (Low Latency Queuing) and CB-WFQ (Class Based Weighted Fair Queuing) scheduling, the corresponding Markov Chains are shown for LLQ queue (Class 1) in Figure 10A; for the rest of queues (lower priority than the first one), are shown in Figure 10B.

Some key points:

- If there are packets at LLQ the scheduler STOPS service of any other queue - > $\lambda_{out}$, i = 0 for any other queue (i=2..N) when packets at LLQ are being served
- "Jumps" from state X0'to X1 occurs when a packet to LLQ arrives, this is at a "$\lambda$IN, 1" rate
- "Jumps" from state X1 to X0 occurs when the last packet at LLQ has been served, this is at a "$\lambda_{out}$, 1 · P1"rate

From this model, it can be calculated the length n of a queue with an overflow probability Pd, an incoming traffic $\lambda$ and a server serving at $\mu$ is:

$$n \geq \frac{\log(1 - \frac{1}{P}_d(1 - \frac{\mu P(0)}{\lambda}))}{\log \frac{\mu P(0)}{\lambda}}$$

where P(0) is the probability of being in the state "0" in the LLQ Markov chain (most priority and blocking the rest of the system when a unit is in it).

In this model, the system queues are updated according to an approaching method moving to the target value, and recalculated each time a packet arrives.

A squatter LSP in the present invention is a LSP which has not enough BW for any of its classes but can acquire (squat) BW of the immediately higher class of service (if some is free). For instance, between a LER A and a LER B there is the following available BW: Class 1: 2Mbps; Class 2: 1Mbps. If the NMS needs to establish a LSP between A and B with 2Mbps for class 2, there is not enough available BW (only 1Mbps). However, as there is some available BW from class 1, the system can use said BW of class 1 for transmitting class 2. Said new LSP is a squatter LSP, as it is using BW from a higher class, and it will have the 'squatter' label. Once the new LSP has been created, the available BW between LER A and LER B is: class 1: 1 Mbps; class 2: OMbps.

In case the system needs to establish new LSPs that require BW from this higher occupied class, class 1 in the example, the squatter LSP could be automatically eliminated for the new LSPs to be created.

To avoid unnecessary deletions of squatter LSPs, a legalization of squatter LSPs method has been implemented in the present invention. Said legalization of squatter LSPs method analyzes if a squatter LSP could be validated or legalized (in case there is enough BW freed), and this way its 'squatter' label could be remove, so it would be a normal LSP and could not be eliminated as squatter.

Squattering is established per class at each link (squatter is not established end-to-end).

To consider when the legalization of squatter LSPs should be done, it is necessary to study in which cases some amount of bandwidth (BW) is freed. Attending to the working of the NMS, the following six cases have been considered as potencial situations in order to legalize a squatter LSP:

1. LSP Creation: If there are not enough resources to create the new LSP, the system asks for a reorganization of the available resources (for instance, deleting squatter LSPs or deleting LSPs with lower priority). This reorganization could release some resources in such a way that an old squatter LSP can be legalized.
2. LSP Deletion: When a LSP is deleted, it is clear that BW is released, so it is another opportunity to try to legalize an old squatter LSP.
3. LSP Modification: If operator decides to modify parameters of a LSP, it can release BW and it could be possible to legalize an old squatter LSP.
4. LSP Rerouting: When the route of the LSP is changed, some resources are released and maybe an old squatter LSP could be legalized.
5. Off-Line Monitoring (Auto-Provisioning): If the system detects that a LSP is being under used and its parameters are modified, it is possible that this produces a release of BW and an old squatter LSP could be legalized.
6. On demand: Operator, at any moment, could be interested in checking the route of a LSP and see if it is possible to legalize any old squatter LSP.

All these cases are schematically represented in **Figure 11.** There are two principal actors that can execute actions that drive to a possible LSP legalization. On the one hand it is a user or an operator through the GUI, when the operator launches any operation over a LSP (Creation / Modification / Rerouting / Deletion). And on the other hand it is the Auto-Provisioning process which will produce a LSPModification, so a LSPOperation.

Following the diagram, we can see that the LSP legalization action will be the last step in a chain that starts with an operation over the LSP, then the CAC (Connection Admission Control) Algorithm validates the operation and finally the legalization method checks if it is possible to legalize any old squatter LSP along the path of the created or modified LSP.

Although the legalization method is represented as a separated unit, actually it would have to be integrated in the CAC Algorithm. But for a better understanding of the process, it is shown separate.

The most important thing in the design of the LSP legalization process is that the concept of "squatter" LSP concerns to NMS but not to the router. So, it doesn't matter to the router if a LSP is squatter or not, it is not necessary to delete and create the LSP, the changes of BW will only affect to NMS.

The LSP legalization can be an independent operation, so:

- It will be an option in the menu of GUI: operator can try to legalize squatters when he wants to.
- It will be the last step of any operation over the LSP (Creation / Modification / Rerouting / Deletion).

When there is a possibility of legalize any LSP, operator has to be asked for permission. In order to avoid this question each time, it will be a new option in the GUI menu, where operator could set that he always allows legalization.

The legalization method can be divided in two parts:

1. Checking: in charge of checking if any LSP can be legalized.
2. Executing: in charge of executing the legalization.

The incoming parameter of the LSP legalization will be the path of the LSP. Some XML messages transmitted between NEMs 7 and NMS 6 are modified so the NMS will communicate the GUI the result of the process of legalization. These messages are: LSPCreationComplete, LSPModificationComplete and LSPDeletionComplete.

The main idea of the LSP legalization method is to check if a squatter LSP can update its state when some amount of resources are released.

In order to implement the legalization method, the code of CAC has been reutilized. In fact, it consists in calling the CAC method taking into account:

1.- Network image must be updated with all previous actions (e.g., if we are try to legalize LSPs after a certain LSP has been deleted, the resources used by the deleted LSP must be freed form database)

2.- All squatter LSPs established in all those interfaces where some amount of resources has been released, are marked as potential LSP to legalize.

3.- For each potential LSP to legalize, CAC method is called but avoiding the possibility of being established as squatter.

Depending on the order that potential LSPs to legalize are chosen, one squatter LSP could be legalized or not. Having this in mind, previously the squatter LSPs to legalize are ordered according to their priority value, so an squatter LSP with a higher priority value has higher possibility to be legalized.

As it has been said before, to consider when the legalization of LSPs should be done, it is necessary to study the six cases in which cases some amount of bandwidth (BW) is freed. **Figures 12 to 16** shows different cases where the legalization method can be applied. For the first case, LSP Creation in legalization use case, the operator wants to create a new LSP. This action will activate the LSP Legalization method, following these steps, as shown in **Figure 12**:

$S1_1$. Operator introduces a new LSP.

$S2_1$. GUI sends a LSPCreation message to NMS and waits synchronously for a successful response from the NMS (for instance, awaits a HTTP response status code 200 OK).

$S3_1$. NMS answers to GUI with a successful response (http 200 OK) and stores information.

Optionally (the optional steps are inside a rectangle made of broken lines), if OSPF route required, steps $S4_1$ to $S7_1$ are carried out:

$S4_1$. If the OSPF-TE (Open Shortest Path First-Traffic Engineering) route, is required, NMS sends a LSPRoute message towards NEM that manages LER, with data to create LSP. The OSPF-TE protocol is a hierarchical interior gateway protocol (IGP) for routing in Internet Protocol, using a link-state in the individual areas that make up the hierarchy, in order to calculate the shortest path tree inside each area.

$S5_1$. NEM answers successfully (with http 200 OK) and Create LSP in disabled status in Router.

$S6_1$. NEM obtains route taken by LSP via SNMP (Simple Network Management Protocol).

$S7_1$. NEM provides NMS with route with the ProvideRoute message including the same MessageID than in LSPRoute message.

$S8_1$. NMS answers with http 200 OK and Invokes CAC Algorithm to verify that QoS parameters are fulfilled for the route.

$S9_1$. CAC Algorithm verifies route with QoS parameters, checks if route fulfils QoS parameters and necessary parameters to modify to achieve it.

$S10_1$. CAC Algorithm updates interface information as for reserved bandwidth and squatter LSP lists by class.

$S11_1$. CAC Algorithm notifies NMS if route is valid and if it is necessary to delete any squatter LSP, including if necessary the order of priority for the deletion.

$S12_1$. NMS sends a LSP Notify Compliant Routes notifying the GUI that the validated routes have been stored in the database.

$S13_1$. The GUI displays all the valid routes and the actions to perform in each one of them. The user chooses a route.

$S14_1$. The GUI sends a LSP Route Selected to tell the NEM which is the selected route.

Optionally, if it is needed to delete squatter or lower priority LSPs, steps $S15_1$ to $S18_1$ are carried out:

$S15_1$. The NMS sends LSPDeletion messages towards NEM that manages LER to delete squatter or lower priority LSPs if required.

$S16_1$. The NEM performs the squatter or lower priority LSP deletion in router.

$S17_1$. For each deleted LSP, the NMS sends a Filter message towards NEM that manages the LER which controls Squatter LSP to delete ACLs (Access Control List) and modify route map that are corresponding to the squatter LSP.

$S18_1$. The NEM performs ACLs deletion and route map modification corresponding to the squatter LSP in router.

$S19_1$. The NMS sends a LSPRoute message to LER with enabled status.

$S20_1$. The NEM creates the LSP in enabled status.

$S21_1$. NMS is notified by means of a LSPCreationComplete message.

$S22_1$. The NMS sends a Filter Creation message towards the LER to apply the ACL and the route-map.

$S23_1$. The NEM creates ACLs and route map in Router.

$S24_1$. The NMS invokes Legalization method to verify if it is possible to legalize any squatter LSP.

$S25_1$. Legalization method checks if there are enough resources to legalize any squatter LSP.

$S26_1$. Legalization Algorithm returns NMS the result of the verification.

$S27_1$. Optionally, if the operator wants to be asked for permission, the NMS sends a message towards GUI to ask the operator for permission to legalize the LSP and waits synchronously for http 200 OK.

$S28_1$. The GUI sends a message towards NMS to give or not the permission of the user and waits synchronously for http 200 OK.

$S29_1$. Perform Legalization method notifies Legalization Algorithm that a LSP squatter must be legalized.

$S30_1$. Legalization Algorithm legalizes the LSP squatter by modifying the BW distribution and the LSP Status

$S31_1$. LegalizationComplete method notifies NMS that the LSP has been legalized.

$S32_1$. NMS notifies GUI that LSP has been created by means of a LSPCreationComplete message.

For the second case, LSP Modification in legalization use case, the operator wants to modify a LSP. This action will activate the LSP legalization method, following these steps, as shown in **Figure 13:**

$S1_2$. Operator wants to modify data relating to a LSP except regarding route.

$S2_2$. GUI sends a LSPModification message to NMS and waits synchronously for http 200 OK.

$S3_2$. NMS answers to GUI with http 200 OK and stores information.

$S4_2$. NMS invokes CAC Algorithm to verify that QoS parameters are fulfilled for the route if there has been a change in QoS requirements.

$S5_2$. CAC Algorithm verifies route with new QoS parameters.

$S6_2$. CAC Algorithm updates interface information as for reserved bandwidth and squatter LSP Lists by Class.

$S7_2$. CAC Algorithm notifies NMS if route is valid and if it is necessary to delete any squatter LSP.

Optionally, if it is needed to delete squatter or lower priority LSPs, steps $S8_2$-$S11_2$ can be carried out:

$S8_2$. NMS sends a LSPDeletion message towards NEM that manages LER that controls squatter or lower priority LSP to be deleted.

$S9_2$. NEM performs the squatter or lower priority LSP deletion in router.

$S10_2$. NMS sends a Filter message towards NEM that manages LER that controls squatter or lower priority LSP to delete ACLs and modify route map that are corresponding to the squatter LSP.

$S11_2$. NEM performs ACLs deletion and route map modification corresponding to the squatter or lower priority LSP in router.

$S12_2$. NMS sends a LSPModification message to LER and LSRs to change QoS requirements in LSP.

$S13_2$. NEM performs a modification in BW associated to a LSP.

$S14_2$. NMS sends a Filter message towards NEM that manages LER that controls LSP to be modified, indicating modification in traffic to be introduced in LSP.

$S15_2$. NEM creates/modifies/deletes ACL and modify route map to include/delete the ACLs.

$S16_2$. The NMS invokes Legalization method to verify if it is possible to legalize any squatter LSP.

$S17_2$. Legalization method checks if there are enough resources to legalize any squatter LSP.

$S18_2$. Legalization method returns NMS the result of the verification.

Optionally, if the operator wants to be asked for permission, steps $S19_2$ to $S20_2$ can be carried out:

$S19_2$. The NMS sends a message towards GUI to ask the operator for permission to legalize the LSP and waits synchronously for http 200 OK.

$S20_2$. The GUI sends a message towards NMS to give or not the permission of the user and waits synchronously for http 200 OK.

$S21_2$. Perform Legalization method notifies Legalization Algorithm that a LSP squatter must be legalized .

$S22_2$. Legalization Algorithm legalizes the LSP squatter by modifying the BW distribution and the LSP Status

$S23_2$. LegalizationComplete method notifies NMS that the LSP has been legalized.

$S24_2$. NMS notifies GUI that LSP has been modified.

For the third case, LSP Rerouting in legalization use case, the operator wants to operator wants to reroute a LSP. This action will activate the LSP Legalization method, following these steps, as shown in **Figure 14**:

$S1_3$. Operator wants to modify the route of a LSP giving an explicit route or leaving that it was routing protocol that decides route.

$S2_3$. GUI sends a LSPRerouting message to NMS and waits synchronously for http 200 OK.

$S3_3$. NMS answers to GUI with http 200 OK and stores information.

Optionally, if OSPF route required, steps $S4_3$- $S7_3$ are carried out:

$S4_3$. If the NMS sends a LSPRoute message towards NEM that manages LER, with data to create LSP with a temporal name.

$S5_3$. NEM answers with http 200 OK and create LSP in Router in disabled state.

$S6_3$. NEM obtains route taken by LSP via SNMP.

$S7_3$. NEM provides NMS with route with the ProvideRoute message including the same MessageID than in LSPRoute message.

$S8_3$. NMS answers with http 200 OK and invokes CAC Algorithm to verify that QoS parameters are fulfilled for the route. The same will be performed with LSP in opposite direction for two-way traffic LSPs. All of this indicating that LSP in previous route will be released so that algorithm can take into account that in its calculations.

$S9_3$. CAC Algorithm verifies route with QoS parameters. CAC Algorithm updates interface information as for reserved bandwidth and squatter LSP Lists by Class.

$S10_3$. CAC Algorithm notifies NMS if route is valid and if it is necessary to delete any squatter LSP.

$S11_3$. NMS sends a LSP Notify Compliant Routes notifying the GUI that the validated routes have been stored in the database.

$S12_3$. The GUI displays all the valid routes and the actions to perform in each one of them.

$S13_3$. The user chooses a route.

$S14_3$. The GUI sends a LSP Route Selected to tell the NEM which is the selected route.

Steps $S15_3$- $S18_3$ are carried out optionally, if it is needed to delete squatter or lower priority LSPs:

$S15_3$. NMS sends LSPDeletion messages towards NEM that manages LER to delete squatter or lower priority LSPs if required.

$S16_3$. NEM performs the squatter or lower priority LSP deletion in router.

$S17_3$. For each deleted LSP, the NMS sends a Filter message towards NEM that manages LER that controls Squatter LSP to delete ACLs and modify route map that are corresponding to the squatter LSP.

$S18_3$. NEM performs ACLs deletion and route map modification corresponding to the squatter LSP in router.
$S19_3$. NMS sends a LSPRoute message to LER with status = "enabled".
$S20_3$. The NEM creates the LSP in enabled status.
$S21_3$. NMS is notified by means of a LSPCreationComplete message.
$S22_3$. The NMS sends a Filter Creation message towards the LER to apply the ACL and the route-map.
$S23_3$. The NEM creates ACLs and route map in Router.
$S24_3$. The NMS invokes Legalization Algorithm to verify if it is possible to legalize any squatter LSP.
$S25_3$. Legalization Algorithm checks if there are enough resources to legalize any squatter LSP.
$S26_3$. Legalization Algorithm returns NMS the result of the verification.

Optionally, if the operator wants to be asked for permission, steps $S27_3$- $S28_3$ are carried out:

$S27_3$. The NMS sends a message towards GUI to ask the operator for permission to legalize the LSP and waits synchronously for http 200 OK.
$S28_3$. The GUI sends a message towards NMS to give or not the permission of the user and waits synchronously for http 200 OK.
$S29_3$ Perform Legalization method notifies Legalization Algorithm that a LSP squatter must be legalized .
$S30_3$. Legalization Algorithm legalizes the LSP squatter by modifying the BW distribution and the LSP Status
$S31_3$. LegatizationComptete method notifies NMS that the LSP has been legalized.
$S32_3$. NMS notifies GUI that LSP has been created by means of a LSPCreationComplete message.

For the fourth case, LSP Deletion in legalization use case, the operator wants to delete a LSP. This action will activate the LSP Legalization method, following these steps, as shown in **Figure 15:**

$S1_4$. Operator wants to delete a LSP.
$S2_4$. GUI sends a LSPDeletion message to NMS and waits synchronously for http 200 OK.
$S3_4$. NMS answers to GUI with http 200 OK and stores information.
$S4_4$. NMS sends a LSPDeletion message towards NEM that manages LER that controls LSP to be deleted.
$S5_4$. NEM performs the LSP deletion in router.
$S6_4$. NMS sends a Filter message towards NEM that manages LER that controls LSP that has been deleted to delete ACLs and modify route map that are corresponding to the LSP.
$S7_4$. NEM performs ACLs deletion and route map modification corresponding to the LSP in router.
$S8_4$. NMS releases resources in route where LSP was going through. The same will be performed with LSP in opposite direction for two-way traffic LSPs. It updates interface information as for reserved bandwidth and squatter LSP Lists by Class.
$S9_4$. The NMS invokes Legalization Algorithm to verify if it is possible to legalize any squatter LSP.
$S10_4$. Legalization Algorithm checks if there are enough resources to legalize any squatter LSP.
$S11_4$. Legalization Algorithm returns NMS the result of the verification.

Optionally, if the operator wants to be asked for permission, steps $S12_4$- $S13_4$ are carried out:

$S12_4$. The NMS sends a message towards GUI to ask the operator for permission to legalize the LSP and waits synchronously for http 200 OK.
$S13_4$. The GUI sends a message towards NMS to give or not the permission of the user and waits synchronously for http 200 OK.
$S14_4$ Perform Legalization method notifies Legalization Algorithm that a LSP squatter must be legalized.
$S15_4$. Legalization Algorithm legalizes the LSP squatter by modifying the BW distribution and the LSP Status
$S16_4$. LegalizationComplete method notifies NMS that the LSP has been legalized.
$S17_4$. NMS notifies GUI that LSP has been deleted.

For the fifth case, on demand in legalization use case, the operator wants to check if any LSP Legalization is possible in the given path. This action will activate the LSP Legalization method, following these steps, as shown in **Figure 16:**

$S1_5$. Operator wants to check LSP Legalization.
$S2_5$- GUI sends a LSPLegalization message to NMS and waits synchronously for http 200 OK.
$S3_5$. NMS answers to GUI with http 200 OK and stores information.
$S4_5$. The NMS invokes Legalization method to verify if it is possible to legalize any squatter LSP.

$S5_5$. Legalization method checks if there are enough resources to legalize any squatter LSP.
$S6_5$. Legalization method returns NMS the result of the verification.

Optionally, steps $S7_5$- $S8_5$ are carried out:

$S7_5$. The NMS sends a message towards GUI to ask the operator for permission to legalize the LSP and waits synchronously for http 200 OK.
$S8_5$. The GUI sends a message towards NMS to give or not the permission of the user and waits synchronously for http 200 OK.$S9_5$ Perform Legalization method notifies Legalization Algorithm that a LSP squatter must be legalized.
$S10_5$. Legalization Algorithm legalizes the LSP squatter by modifying the BW distribution and the LSP Status
$S11_5$. LegalizationComplete method notifies NMS that the LSP has been legalized.
$S12_5$. NMS notifies GUI the result of the LSP Legalization with a LSPLegalizationComplete message.

Regarding the interface definition, SOAP can be used over HTTP to encapsulate XML data to exchange between GUI, NMS and NEMs, as shown in **Figure 17**. A synchronous HTTP Response without body is expected after sending an HTTP Request: 200 OK response if message parsing is successful; 400 Bad Request if message parsing is wrong. An asynchronous HTTP Request with the same ws-addressing Message ID is expected to correlate if required.
All SOAP requests use the HTTP POST method and specify at least two headers: Content-Type and Content-Length. The actual SOAP message is passed as the body of the request or response.

<u>HTTP request structure:</u>

POST /enigma HTTP/1.1
Content-Type: text/xml
Content-Length: number of bytes in body
SOAP Message

<u>HTTP response structure:</u>

HTTP/1.1 200 OK or HTTP/1.1 400 Bad Request
Content-Type: text/html
Content-Length: 0

Regarding the SOAP message, the SOAP header is built complying WS-Addressing, a specification form W3C that provides transport-neutral mechanisms to address Web services and messages. This specification defines XML elements to identify Web services endpoints and to secure end-to-end endpoint identification in messages. The SOAP body is the xml command.

<u>SOAP message structure:</u>

```
<S:Envelope xmlns:S="http://www.w3.org/2003/05/soap-envelope"
   xmlns:wsa="http://schemas.xmlsoap.org/ws/2004/08/addressing">
   <S:Header>
          <wsa:MessagelD> uuid:Identifier </wsa:MessagelD>
          <wsa:ReplyTo>
                 <wsa:Address> OriginationAddress </wsa:Address>
          </wsa:ReplyTo>
          <wsa:To> DestinationAddress</wsa:To>
          <wsa:Action> Command </wsa:Action>
   </S:Header>
   <S:Body>
          Command XML Data
```

```
    </S: Body>
</S:Envelope>
```

Fields in Soap Header:

MessageID : is an identifier extracted from a pool that it is used to correlate request with response.
ReplyTo: Origin Address. We can use it to specify GUI Address, NMS Address or NEM Identifer.
To: Destination Address. We can use it to specify GUI Address, NMS Address or NEM Identifer.
Action: Command to execute whose information is described in Soap Body.
The GUI-NMS interface is used between GUI and NMS to exchange messages to share necessary data. All xml messages are defined using XML Schema Definition (XSD), a specification from W3C to describe the structure of an XML document.
By using the message LSPCreationComplete message, the NMS indicates the GUI that the LSP has been successfully created and if there is any legalized LSP. The fields of this message are shown in **Table 6** below.
By using the message LSPModificationComplete message, the NMS indicates the GUI that the LSP has been successfully modified and if there is any legalized LSP. The fields of this message is shown in **Table 7** below.
By using the message LSPDeletionComplete message, the NMS indicates the GUI that the LSP has been successfully removed and if there is any legalized LSP. The fields of this message are shown in **Table 8** below.
By using the message LSPLegalization message, the GUI indicates NMS that the user wants to check if in the given route there is a possibility of legalize any LSP. The fields of this message are shown in **Table 9** below.
By using the message LSPLegalizationComplete message, the NMS indicates the GUI the result of the LSP Legalization operation. The fields of this message are shown in **Table 10** below.
The following messages have been defined or modified for a correct communication in the GUI-NMS interface:

- LSPCreation message: GUI indicates NMS to accomplish a LSP creation and provides with all necessary involved data. New fields have been defined derived from legalization functionalities, as shown in **Table 11** below.
- LSPRerouting message: A new field has been defined derived from Legalization functionality, as shown in **Table 12** below.
- LSPModification message: A new field has been defined derived from legalization functionality, as shown in **Table 13** below.
- LSPDeletion Message: A new field has been defined derived from Deletion functionality, as shown in **Table 14.**
- AskForPermission message: When NMS detects that one ore more LSPs can be legalized, it asks permission to GUI in order to change the status of the LSP from squatter to legal. An AskForPermission is only used by NMS if the Autolegalization field in the message associated to the action that has produced the release of resources is equals to 1.' Otherwise this message is never sent and LSPs are automatically legalized. Fields are shown in **Table 15.**
- ReturnPermissionOption message: Upon a reception of an AskForPermission message, GUI indicates the name of the LSP that are allowed to be legalized. Fields are shown in **Table 16.**

The **Tables 1 to 16** below show the different fields of the messages created/modified by the present invention:

| Field. | Occurs | Type | Description |
|---|---|---|---|
| NEMIdentifier | 1 | int | It identifies a specific NEM. It must be globally unique. |
| LSPName | 1 | string | It identifies the LSP and it is the name used to configure the tunnel in router. It must be globally unique. |
| Origin | 1 | string | NEM Identifier of ingress LER |
| OriginAddress | 1 | string | IP Address of loopback interface in ingress LER. |
| Destination | 1 | string | NEM Identifier of egress LER |
| DestinationAddress | 1 | string | IP Address of loopback interface in egress LER. |
| **Network** | 1 | complex | Input network type (UMTS or IETF). It indicates how input traffic is classified and the QoS parameters that must fulfil this LSP for the corresponding CoS.<br>Network::=[ Type, QualityCoS ] |
| Type | 1 | string | The type of input network. Its value could be:<br>UMTS or IETF and is useful for information purposes. |
| **QualityCoS** | 1 .. n | complex | It indicates the Classes of Service to be included in LSP and their QoS parameters.<br>CoS::= [Name,BW, Delay, Jitter, PacketLoss] |

<table>
<tr><td>ClassName</td><td>1</td><td>string</td><td>Name used to define Class in ingress LER.</td></tr>
<tr><td>Action</td><td>1</td><td>string</td><td>It indicates the modification operation to apply to this class: New.</td></tr>
<tr><td>BW</td><td>1</td><td>int</td><td>Bandwidth in Kbits to reserve for this Class</td></tr>
<tr><td>Delay</td><td>0/1</td><td>int</td><td>Maximum delay in msec for this Class in LSP</td></tr>
<tr><td>Jitter</td><td>0/1</td><td>int</td><td>Maximum jitter in msec for this Class in LSP</td></tr>
<tr><td>PacketLoss</td><td>1</td><td>int</td><td>A percentage indicating maximum packet loss for this Class in LSP</td></tr>
<tr><td>IsMonitored</td><td>0/1</td><td>Boolean</td><td>Whether the class is monitored or not.</td></tr>
<tr><td>MaxThres</td><td>0/1</td><td>Float</td><td>It specifies the highest bandwidth (%) that can be used prior to Auto-Provisioning.</td></tr>
<tr><td>MinThres</td><td>0/1</td><td>Float</td><td>It specifies the lowest bandwidth (%) that can be used prior to Auto-Provisioning.</td></tr>
<tr><td>SetupPriority</td><td>0/1</td><td>int</td><td>It is the priority for taking resources. It must be lower than or equal to its hold priority. It is also a number between 0 and 7.</td></tr>
<tr><td>Route</td><td>1</td><td>complex</td><td>It is the route for the LSP. It could be explicitly given or leave that OSPF-TE calculate it or an external algorithm.<br>Route::= [ MethodMask, Node ]</td></tr>
<tr><td>Method Mask</td><td>1</td><td>Int</td><td>This mask is calculated with 3 bits representing the 3 ways to obtain the route. The MSB stands for the explicit route, the 2$^{nd}$ byte for the OSPF-TE route, and the LSB for the CAC algorithm route. If a bit is set to '1', this method will be used.<br>The possible values are shown in the next table:
<table>
<tr><td></td><td>EXPLIC</td><td>OSPF-TE</td><td>CAC</td></tr>
<tr><td>0=000b</td><td>NO</td><td>NO</td><td>NO</td></tr>
<tr><td>1=001b</td><td>NO</td><td>NO</td><td>YES</td></tr>
<tr><td>2=010b</td><td>NO</td><td>YES</td><td>NO</td></tr>
<tr><td>3=011b</td><td>NO</td><td>YES</td><td>YES</td></tr>
<tr><td>4=100b</td><td>YES</td><td>NO</td><td>NO</td></tr>
<tr><td>5=101b</td><td>YES</td><td>NO</td><td>YES</td></tr>
<tr><td>6=110b</td><td>YES</td><td>YES</td><td>NO</td></tr>
<tr><td>7=111b</td><td>YES</td><td>YES</td><td>YES</td></tr>
</table>
The value 0 (000b) is not valid, because no method will be used.</td></tr>
<tr><td>Node</td><td>1 .. n</td><td>string</td><td>It is the ip address of input interface of the LSR that LSP goes through.</td></tr>
</table>

| | | | |
|---|---|---|---|
| **ACL** | 1 .. n | complex | It defines traffic that is going to be introduced in the LSP. It is done in form of Access List. And also the rates to apply rate limit to this selected traffic.<br>ACL::= [ACLName, IPPrecedence, Source, SourceMask, Destination, DestinationMask, AverageRate, BurstNormal, BurstMax] |
| ACLName | 1 | string | It is the name of ACL. It must be locally unique. |
| Action | 1 | string | It indicates the modification operation to apply to this ACL: New. |
| InterfaceIP | 0/1 | string | It is the IP of the interface where the ACL is applied. |
| InterfaceName | 0/1 | string | It is the name of the interface where the ACL is applied. |
| IPPrecedence | 0/1 | int | It specifies the precedence value. |
| Source | 0/1 | string | It is the ip address that identifies source address of traffic to include in LSP. |
| SourceMask | 0/1 | string | Wildcard bits to be applied to source. Each wildcard bit set to zero indicates that the corresponding bit position in the packet's ip address must exactly match the bit value in the corresponding bit position in the source. |
| Destination | 0/1 | string | It is the ip address that identifies destination address of traffic to include in LSP. |
| DestinationMask | 0/1 | string | Wildcard bits to be applied to destination. Each wildcard bit set to zero indicates that the corresponding bit position in the packet's ip address must exactly match the bit value in the corresponding bit position in the source. |
| Average Rate | 0/1 | int | It specifies in bits per second the average rate to apply rate-limit in the LSP for this ACL. |
| BurstNormal | 0/1 | int | It specifies normal bust size in bytes to apply rate-limit. |
| BurstMax | 0/1 | int | It specifies maximum bust size in bytes to apply rate-limit. |
| HasOpposite | 1 | boolean | Whether the LSP has an opposite or not. |
| IsOpposite | 1 | boolean | Whether the LSP is opposite or not. |
| OppositeName | 0/1 | string | The name of the opposite LSP (if exists) |
| IsMonitored | 1 | boolean | Whether the LSP is monitored or not. |
| AutoModification | 0/1 | Boolean | Whether the NMS notifies the GUI when LSP modifications are done or not. |

## Table 1: 'LSPCreation' message fields in GUI-NMS interface

**Table 2: LSPRoute Fields in NMS-NEM interface**

| Field. | Occurs | Type | Description |
|---|---|---|---|
| LSPName | 1 | string | It identifies the LSP and it is the name used to configure the tunnel in router. It must be globally unique. |
| isExistingLSP | 1 | boolean | It identifies if LSP is new or we have rerouting an existing LSP. |
| isEnabled | 1 | boolean | Indicates whether the LSP should be created in disabled state (to get the OSPF-TE route) or in enabled state (creating the final LSP). |
| DestinationAddress | 1 | string | IP Address of the loopback interface in egress LER |
| BW | 1 | int | Bandwidth in Kbits to reserve for this LSP |
| Affinity | 0 .. n | string | Colour that LSP must avoid in its route. |
| HoldPriority | 0/1 | int | It is the priority for holding resources. It is a number between 0(highest) and 7(lowest). |
| SetupPriority | 0/1 | int | It is the priority for taking resources. It must be lower than or equal to its hold priority. It is also a number between 0 and 7. |
| IsMonitored | 1 | boolean | Whether the LSP is monitored or not. |
| **Route** | 1 | complex | It is the route for the LSP. It could be explicitly given or leave that OSPF-TE calculate it or an external algorithm. Route::= [ isExplicit, Node ] |
| Node | 0 .. n | string | It is the ip address of input interface of the LSR that LSP goes through. |

**Table 3: Filter Fields in NMS-NEM interface**

| Field. | Occurs | Type | Description |
|---|---|---|---|
| **ACL** | 0 .. n | complex | It defines traffic that is going to be introduced in the LSP. It is done in form of Access List. And also the rates to apply rate limit to this selected traffic. ACL::= [Name, IPPrecedence, Source, SourceMask, Destination, DestinationMask, AverageRate, BurstNormal, BurstMax] |
| ACLName | 1 | string | It is the name of ACL. It must be locally unique. |
| Action | 1 | string | It indicates the modification operation to apply to this ACL: New, Modify, Delete. |
| InterfaceIP | 1 | int | It specifies the IP address of the interface where the ACL will be applied. |
| InterfaceName | 1 | int | It specifies the name of the interface where the ACL will be applied. |
| IPPrecedence | 0/1 | int | It specifies the precedence value. |
| Source | 0/1 | string | It is the ip address that identifies source address of traffic to include in LSP. |
| SourceMask | 0/1 | string | Wildcard bits to be applied to source. Each wildcard bit set to zero indicates that the corresponding bit position in the packet's ip address must exactly match the bit value in the corresponding bit position in the source. |
| Destination | 0/1 | string | It is the ip address that identifies destination address of traffic to include in LSP. |
| DestinationMask | 0/1 | string | Wildcard bits to be applied to destination. Each wildcard bit set to zero indicates that the corresponding bit position in the packet's ip address must exactly match the bit value in the corresponding bit position in the source. |

(continued)

| Field. | Occurs | Type | Description |
|---|---|---|---|
| Average Rate | 0/1 | int | It specifies in bits per second the average rate to apply rate-limit in the LSP for this ACL. |
| BurstNormal | 0/1 | int | It specifies normal bust size in bytes to apply rate-limit. |
| BurstMax | 0/1 | Int | It specifies maximum bust size in bytes to apply rate-limit. |
| **RouteMap** | 0 .. n | complex | It specifies route map to apply to introduce traffic in LSP. |
| Name | 1 | string | Name of the route map. There is a route map name for each interface in ingress routers. |
| Sequence | 1 | int | Sequence number in route map. |
| Action | 1 | string | It indicates the modification operation to apply to this route map: New, Modify, Delete. |
| ACLName | 1 | string | It indicates the name of the ACL to be used in route map. |
| LSPName | 1 | string | It indicates the name of the LSP to be used in route map. |
| InterfaceName | 1 .. n | string | Interface where applying Route Map: Type and Number |

**Table 4: SetAlarm Fields in NMS-NEM interface**

| Field. | Occurs | Type | Description |
|---|---|---|---|
| **LSP** | 1...n | complex | Specifies the LSP which has monitored classes. |
| Ispid | 1 | string | Tunnel name. |
| **Classes** | 1...n | complex | Specifies, the parameters of all monitored classes |
| classname | 1 | string | ClassName |
| maxThres | 1 | int | Highest threshold expressed in %. |
| minThres | 1 | int | Lowest threshold expressed in %. |

**Table 5: TrapNotification Fields in NMS-NEM interface**

| Field. | Occurs | Type | Description |
|---|---|---|---|
| Type | 1 | string | It is the alarm name and follows a code described in the document "*ENIGMA D8.5 Error Codes*" |
| IPAddress | 0/1 | string | It indicates the interface that goes down or excess traffic threshold. |
| LSPName | 0/1 | string | It indicates the Name of the LSP that changes status or exceeds traffic. |
| ClassName | 0/1 | string | It indicates the Name of the Class that identifies the queue that exceeds threshold. |
| Time | 1 | long | It is the timestamp when the trap takes place. |

**Table 6: LSPCreationComplete Fields in GUI-NMS interface**

| Field. | Occurs | Type | Description |
|---|---|---|---|
| LSPName | 1 | String | It identifies the LSP and it is the name used to configure the tunnel in router. It must be globally unique. |
| isSuccess | 1 | Boolean | Whether the LSP has been successfully created or not. |
| hasLegalization | 1 | Boolean | Whether there has been any LSP legalized. |

(continued)

| Field. | Occurs | Type | Description |
|---|---|---|---|
| legalizedLSPName | 0 .. n | String | The name of the legalized LSP. |

**Table 7: LSPModificationComplete Fields in GUI-NMS interface**

| Field. | Occurs | Type | Description |
|---|---|---|---|
| LSPName | 1 | String | It identifies the LSP and it is the name used to configure the tunnel in router. It must be globally unique. |
| isSuccess | 1 | Boolean | Whether the LSP has been successfully created or not. |
| hasLegalization | 1 | Boolean | Whether there has been any LSP legalized. |
| legalizedLSPName | 0 .. n | String | The name of the legalized LSP. |

**Table 8: LSPDeletionComplete Fields in GUI-NMS interface**

| Field. | Occurs | Type | Description |
|---|---|---|---|
| LSPName | 1 | String | It identifies the LSP and it is the name used to configure the tunnel in router. It must be globally unique. |
| isSuccess | 1 | Boolean | Whether the LSP has been successfully created or not. |
| hasLegalization | 1 | Boolean | Whether there has been any LSP legalized. |
| legatizedLSPName | 0 .. n | String | The name of the legalized LSP. |

**Table 9: LSPLegalization Fields in GUI-NMS interface**

| Field. | Occurs | Type | Description |
|---|---|---|---|
| Route | 1 | String | It indicates the route where LSP legalization has to be checked. |

**Table 10: LSPLegalizationComplete Fields in GUI-NMS interface**

| Field. | Occurs | Type | Description |
|---|---|---|---|
| hasLegalization | 1 | Boolean | Whether there has been any LSP legalized. |
| legalizedLSPName | 0 .. n | String | The name of the legalized LSP. |

**Table 11: New LSPCreation Fields in GUI-NMS interface**

| Field. | Occurs | Type | Description |
|---|---|---|---|
| MonitorLspRerouting | 1 | Boolean | Whether BMS must monitor the LSP in order to autoreroute it in case of link/node failure. |
| NotifyRerouting | 1 | Boolean | Whether GUI must be notified when an LSP has been autorerouted by BMS in in case of link/node failure. |
| AutoLegalization | 1 | Boolean | Whether GUI must be asked when existing squatter LSPs can be legalized due to the current LSP Creation. AutoLegalization=1 indicates that legalitzation of LSPs is performed automatically without asking the GUI. |

(continued)

| Field. | Occurs | Type | Description |
|---|---|---|---|
| **QualityCoS** | 1 .. n | complex | It indicates the Classes of Service to be included in LSP, their QoS parameters. CoS:=[Name,BW, Delay, Jitter, PacketLoss] and whether this CoS must be BMS monitored and the bandwidth thresholds used in the routers in order to detect under or overutilization |
| IsMonitored | 0..1 | Boolean | Whether BMS must monitor the CoS of the LSP in order to modify its reserved bw in case of bandwidth under or overutilization. |
| NotifyModifications | 0..1 | Boolean | Whether GUI must be notified when the reserved bandwidth of a CoS has been modified by BMS |
| MinThres | 0..1 | int | It indicates the percentage under the reserved bandwidth of the CoS in order to the router detects underutilization |
| MaxThres | 0..1 | int | It indicates the percentage over the reserved bandwidth of the CoS in order to the router detects overutilization |

**Table 12: New LSPRerouting Field in GUI-NMS interface**

| Field. | Occurs | Type | Description |
|---|---|---|---|
| AutoLegalization | 1 | Boolean | Whether GUI must be asked when existing squatter LSPs can be legalized due to the current LSP Rerouting. AutoLegalization=1 indicates that legalitzation of LSPs is performed automatically without asking the GUI. |

**Table 13: New LSPModification Field in GUI-NMS interface**

| Field. | Occurs | Type | Description |
|---|---|---|---|
| AutoLegalization | 1 | Boolean | Whether GUI must be asked when existing squatter LSPs can be legalized due to the current LSPModification. AutoLegalization=1 indicates that legalitzation of LSPs is performed automatically without asking the GUI. |

**Table 14: New LSPDeletion Field in GUI-NMS interface**

| Field. | Occurs | Type | Description |
|---|---|---|---|
| AutoLegalization | 1 | Boolean | Whether GUI must be asked when existing squatter LSPs can be legalized due to the current LSPdeletion. AutoLegalization=1 indicates that legalitzation of LSPs is performed automatically without asking the GUI. |

**Table 15: AskForPermission message in GUI-NMS interface**

| Field. | Occurs | Type | Description |
|---|---|---|---|
| LSPName | 0..N | String | It indicates the names of the LSPs that can be legalized. |

**Table 16: ReturnPermissionOption Message in GUI-NMS interface**

| Field. | Occurs | Type | Description |
|---|---|---|---|
| LSPName | 0..N | String | It indicates the names of the LSPs to be legalized. Note that the first position must always contain the name of the LSP that has been generated the legalization of the LSPs |

## Claims

1. System for monitoring and optimizing traffic in MPLS-DiffServ networks, said networks comprising:

    - a plurality of routers (9), being said routers either LER (2) or LSR (3);
    - a Network Management System, NMS (6), configured for controlling the MPLS-DiffServ network (1);
    - a plurality of Network Element Managers, NEMs (7), each NEM (7) configured for managing the communication with at least one router (9);
    - a Graphical User Interface, GUI (8), to interact with the NMS (6) and configure the system;

    **characterized in that** each NEM (7) comprises:

    - a dispatcher (15) configured for:
        - • analyzing the messages received from the NMS (6) and distributing them to either a configuration module (30) or a monitoring module (31) according to the type of message;
        - • sending back messages with information from the router (9) to the NMS (6);
    - the configuration module (30) for each router (9) managed by the NEM (7), for configuring said router (9) and obtaining its configuration;
    - a BMS-NEM module (11) for each router (9) managed by the NEM (7), comprising:
        - • the monitoring module (31) configured for:
            - receiving and executing monitoring instructions from the NMS (6);
            - retrieving, from the router (9) managed by the NEM, information relating to traffic data and QoS parameters and sending said information to the dispatcher (15);
        - • an alarm module (32) for receiving and analyzing SNMP events generated internally in the router (9), and sending said analyzed SNMP events to the dispatcher (15);

    **in that** each NEM (7) is configured to detect, for each class i supported by the router (9), whether used bandwidth $BW_i$ for said class i in a LSP is below a minimum threshold $BW_{MINi}$ for said class i, and/or used bandwidth $BW_i$ is over a maximum threshold $BW_{MAXi}$ for said class i; and **in that** case send an alarm message to the NMS (6) to notify the alarm situation; **and in that** the NMS (6) comprises:
    - an alarm module (40) configured for receiving and analyzing the alarm messages from the NEMs (7); .
    - an auto-provisioning module (41) configured for, in case a specific class within a LSP in under/over utilization, modifying the LSP parameters accordingly to adjust them to the present network situation.

2. System for monitoring and optimizing traffic in MPLS-DiffServ networks according to claim 1, **characterized in that** each NEM (7) is additionally configured for checking the state of all the links used by the LSPs and, in case a NEM (7) detects that at least one link of a LSP is unavailable, notifying the NMS (6) that said LSP needs to be re-routed; **and in that** the NMS (6) additionally comprises an auto-rerouting module (42) configured for, in case the NEM (7) alerts the NMS (6) that a specific link of a LSP is unavailable, rerouting said LSP to get to the destination.

3. System for monitoring and optimizing traffic in MPLS-DiffServ networks according to any of previous claims, **characterized in that** the monitoring module (31) comprises:

    - a monitoring thread (21) configured for sending and receiving data to/from the dispatcher (15);
    - a monitoring queue (17) for storing monitoring messages from the NMS (6) and from the router (9);
    - a monitoring messages processor (18) configured for executing the monitoring requests and retrieving from the router (9) a set of statistics about traffic to be sent to the NMS (6).

4. System for monitoring and optimizing traffic in MPLS-DiffServ networks according to any of previous claims, **characterized in that** the alarm module (32) comprises an alarm thread (21) comprising:

    - a SNMP trap event processor for decoding and translating SNMP events generated in the router (9);
    - encoding and sending means for encoding and sending messages to the NMS (6) through the dispatcher (15).

**5.** Method for monitoring and optimizing traffic in MPLS-DiffServ networks, said networks comprising:

- a plurality of routers (9), being said routers either LER (2) or LSR (3);
- a Network Management System, NMS (6), configured for controlling the MPLS-DiffServ network (1);
- a plurality of Network Element Managers, NEMs (7), each NEM (7) configured for managing the communication with at least one router (9);
- a Graphical User Interface, GUI (8), to interact with the NMS (6) and configure the system;

**characterized in that** the method comprises:

- receiving and executing the NEM (7) monitoring instructions from the NMS (6);
- retrieving the NEM (7), from the router (9) managed by the NEM (7), information relating to traffic data and QoS parameters and sending said information to the NMS (6);
- receiving and analyzing the NEM (7) SNMP events generated internally in the router (9), and sending said analyzed SNMP events to the NMS (6);
- detecting the NEM (7), for each class i supported by the router (9), whether used bandwidth $BW_i$ for said class i in a LSP is below a minimum threshold $BW_{MINi}$ for said class i, and/or used bandwidth $BW_i$ is over a maximum threshold $BW_{MAXi}$ for said class i; and **in that** case send an alarm message to the NMS (6) to notify the alarm situation;
- receiving and analyzing the NMS (6) the alarm messages from the NEMs (7);
- in case a specific class within a LSP in under/over utilization, modifying the LSP parameters accordingly to adjust them to the present network situation.

**6.** Method for monitoring and optimizing traffic in MPLS-DiffServ networks according to claim 5, **characterized in that** the method additionally comprises:

- checking each NEM (7) the state of all the links used by the LSPs and, in case a NEM (7) detects that at least one link of a LSP is unavailable, notifying the NMS (6) that said LSP needs to be re-routed;
- in case the NEM (7) alerts the NMS (6) that a specific link of a LSP is unavailable, rerouting the NMS (6) said LSP to get to the destination.

**7.** Method for obtaining and validating an optimized route in MPLS-DiffServ networks, being said route established between an origin node and a destination node, **characterized in that** the method comprises:

a- obtaining a route R between the origin and the destination and, at the same time as the route between the origin node and the destination node is being obtained, validating the QoS requirements link by link of said route, said validation process comprising, for each node N to be validated and until said node N is the last node of the route R the following steps:

a1• evaluating if said node fulfils the bandwidth BW requirements for each class;

- in case the BW requirements are not fulfilled:

a2- optionally including a BW improvement process;
a3- in case the BW requirements are not finally fulfilled, going to step b);

- in case the BW requirements are fulfilled:

a4• evaluating if said node fulfils the delay, jitter and packet loss requirements, by using the cumulative delay $Delay_{[N-1]}$, the cumulative jitter $Jitter_{[N-1]}$ and the cumulative packet loss $PacketLoss_{[N-1]}$ obtained in the route until the current node N;

- in case any of the delay, jitter and packet loss requirements are not fulfilled:

a5- optionally including an adjustment process for adjusting the delay, jitter and packet loss;
a6• obtaining the cumulative delay, $Delay_N$, the cumulative jitter, $Jitter_N$, and the cumulative packet loss, $PacketLoss_N$, obtained in the route until the node N;

b- checking if route R is the last possible route between the origin and the destination, and if it is not the last one going to step a);
c- checking if there is at least one route that fulfils all the QoS requirements;
e- deciding the most suitable route.

**8.** Method for obtaining and validating an optimized route in MPLS-DiffServ networks according to claim 7, **characterized in that** the method further comprises:

- in case in step c) it has been checked that no route fulfills all the QoS requirements, applying an adjustment process for adjusting the delay, jitter and packet loss for those routes fulfilling the BW requirements.

**9.** Method for obtaining and validating an optimized route in MPLS-DiffServ networks according to any of claims 7-8, **characterized in that** the method further comprises, previous to step e), a route marker process (d) for marking LSPs and helping in the decision.

**10.** Method for obtaining and validating an optimized route in MPLS-DiffServ networks according to any of claims 7-9, **characterized in that** the adjustment process for adjusting the delay, jitter and packet loss in step a5) comprises a Dynamic Resource Allocation DRA method.

**11.** Method for obtaining and validating an optimized route in MPLS-DiffServ networks according to any of claims 7-10, **characterized in that** the BW improvement process of step a2) comprises:

- applying a DRA method to said node;
- in case the BW requirements are not fulfilled yet, dropping a LSP with lower priority;
- in case the BW requirements are not fulfilled yet, dropping a squatter LSP, a squatter LSP being a LSP which had not enough BW for any of its classes but has acquired or squatted free BW of the immediately higher class of service;
- in case the BW requirements are not fulfilled yet, creating the LSP as squatter.

**12.** Route marker process for marking validated LSPs in MPLS-DiffServ networks, **characterized in that** said marking is done according with different N parameters $P_i$, each parameter being in the range [0-10], value 0 for the worst note and $V_{MAX}$ for the best note, and each one of those parameters $P_i$ being assigned a weight $w_i$ such that

$$\sum_{i=1}^{N} w_i = 1;$$

**in that** the formula to compute the mark M is $M = \sum_{i=1}^{N} w_i \cdot P_i$;

said parameters $P_i$ including at least one of the following:

- Cost of deleting an existing LSP, being computed as follows:

  • starting with X=10;
  • for each dropped LSP, subtracting 1 from X;
  • computing $P_i$ as $P_i$=max(0,X);

- CPU load in the routers, being computed as follows:

  • for each router j along the path, $CPU_j$=100-%$CPU_j$, being %$CPU_j$ the monitored value);
  • computing mean value among all routers:

$$P_i = \frac{\sum_{j=1}^{N_R} CPU_j}{N_R}, \quad i$$

being $N_R$ the number of routers along the LSP;

- The number of nodes and links in the LSP, being computed as follows:

  • starting with X=10;
  • for each hop in the LSP, subtracting 1 from X;
  • computing $P_i$ as $P_i$=max(0,X);

- Penalty if the new LSP has to be created as squatter, a squatter LSP being a LSP which had not enough BW for any of its classes but has acquired or squatted free BW of the immediately higher class of service:

  • starting with X=10;
  • at each hop for each class established as squatter, subtracting 1 from X;
  • computing $P_i$ as $P_i$=max(0,X);

- Delay values along the path:

  • for each class j and for each interface m:

    o computing Rj as:

$$R_j = \frac{est_j}{QoS_req_j} \cdot 10$$

being $est_j$ the estimated delay value;

○ $N_j$=10-$R_j$;
○ computing mean value among all classes:

$$R_m = \frac{\sum_{j=1}^{N_{CoS}} R_j}{N_{CoS}} ,$$

being $N_{CoS}$ the number of CoS carried by the LSP;

  • computing mean value among all interfaces:

$$P_i = \frac{\sum_{m=1}^{N_R} R_m}{N_R} ,$$

being $N_R$ the number of interfaces along the LSP;

- Packet loss values along the path, being computed the same way as the delay values along the path;
- Available bandwidth after creating the LSP, being computed as follows:

  • for each class j:

    o computing the minimum available bandwidth ($min_avbw_j$) along the path, so that each class $min_avbw_j$ is the bottleneck bandwidth;
    o computing $R_j$ as:

$$R_j = \frac{min_avbw_j}{org_bw_j} \cdot 10$$

o computing mean value among all classes:

$$P_i = \frac{\sum_{j=1}^{N_{CoS}} R_j}{N_{CoS}} ,$$

being $N_{COS}$ the number of CoS carried by the LSP;

- Security of the router, to represent the importance of routers added to the network, being computed as follows:

  • for each router of the network, the operator assigns a value Rj between 0-10 indicating its importance in the network;
  • computing mean value among all routers of the LSP:

$$P_i = \frac{\sum_{j=1}^{N_R} R_j}{N_R} ,$$

being $N_R$ the number of routers along the LSP.

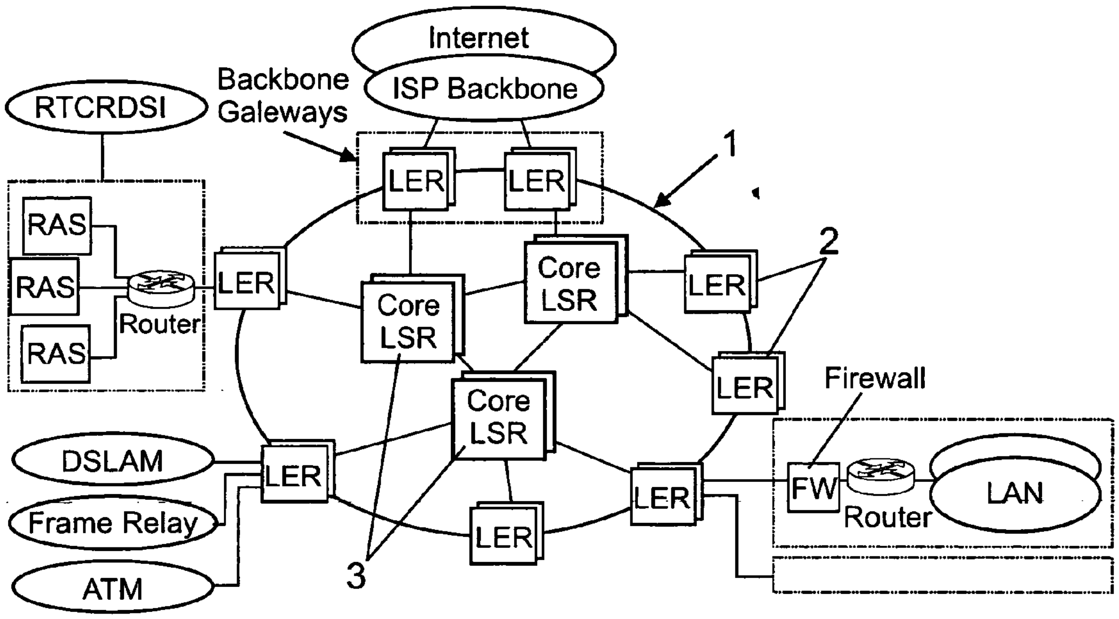
Internet
ISP Backbone
Backbone Galeways
RTCRDSI
1
RAS
RAS
RAS
Router
LER
LER
LER
Core LSR
Core LSR
LER
2
LER
Firewall
Core LSR
DSLAM
LER
Frame Relay
ATM
LER
LER
FW
Router
LAN
3

FIG. 1

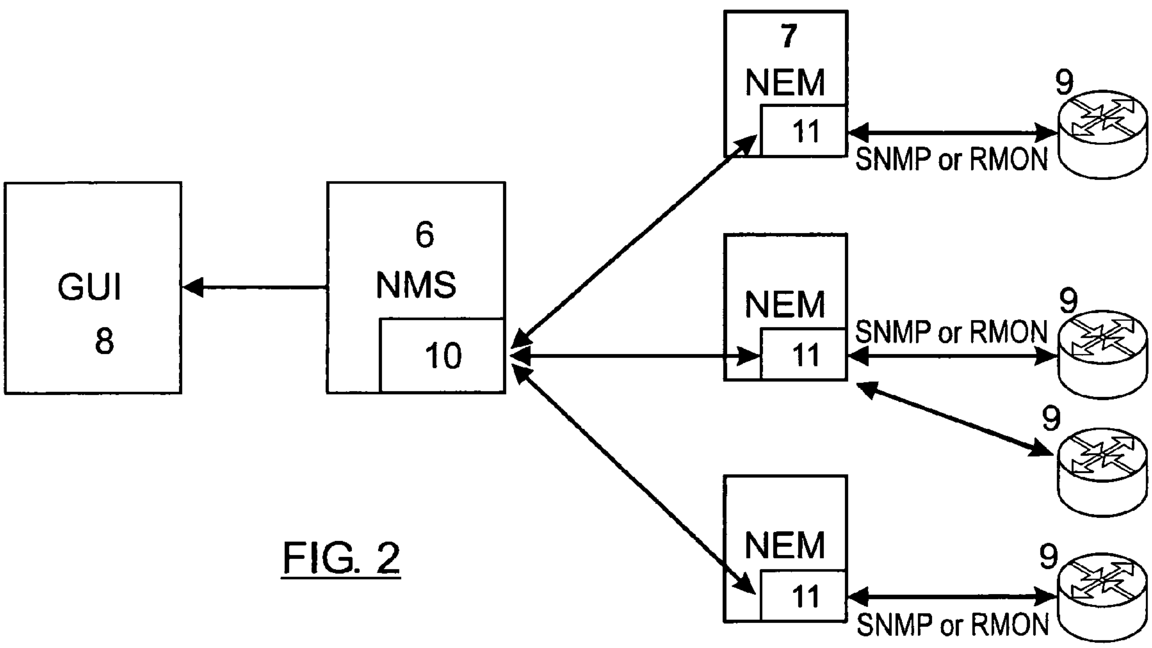
7
NEM
11
9
SNMP or RMON
GUI
8
6
NMS
10
NEM
11
9
SNMP or RMON
9
NEM
11
9
SNMP or RMON

FIG. 2

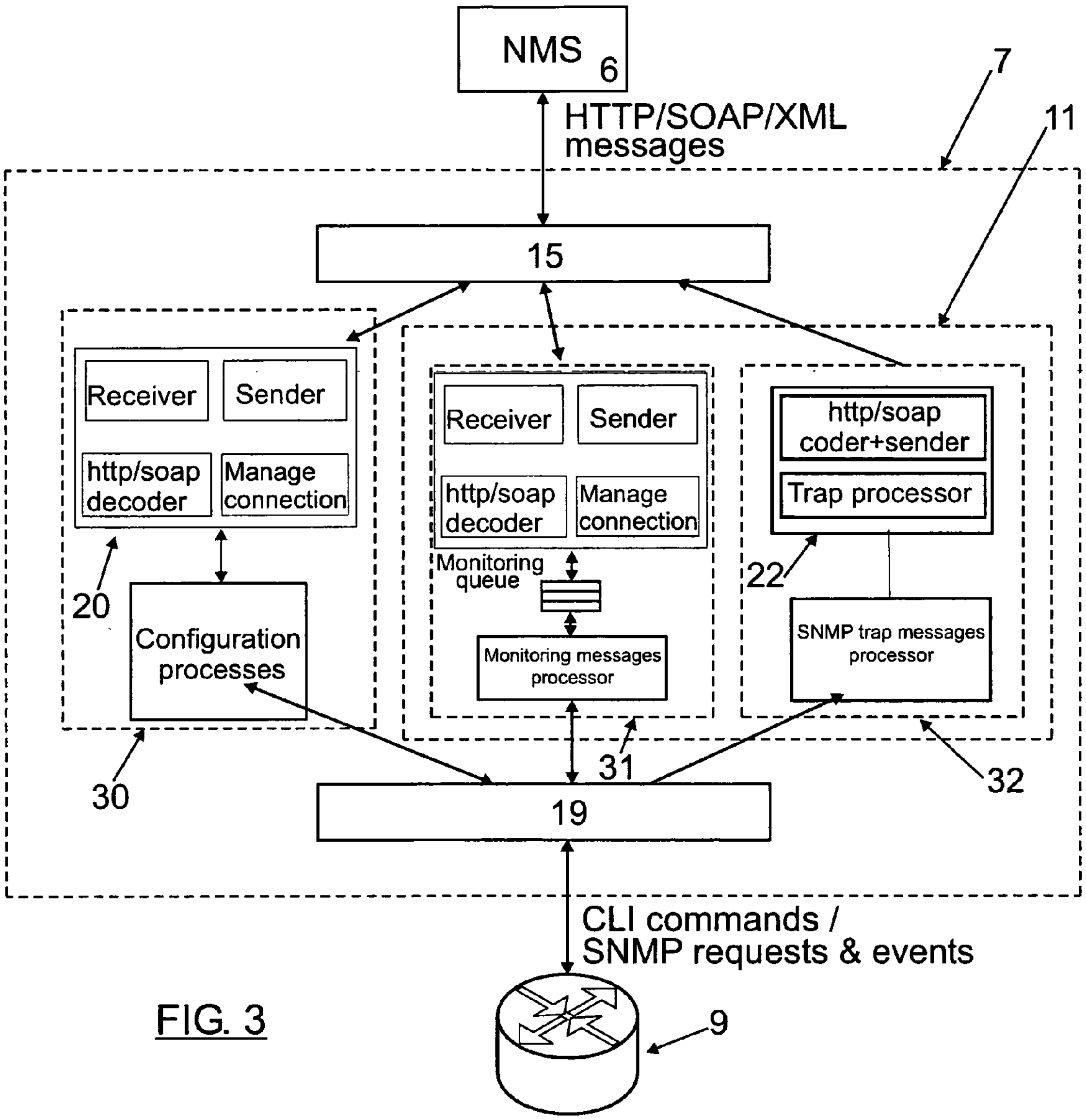
NMS 6
HTTP/SOAP/XML messages
7
11
15
Receiver
Sender
http/soap decoder
Manage connection
20
Configuration processes
30
Receiver
Sender
http/soap decoder
Manage connection
Monitoring queue
Monitoring messages processor
31
http/soap coder+sender
Trap processor
22
SNMP trap messages processor
32
19
CLI commands / SNMP requests & events
9

FIG. 3

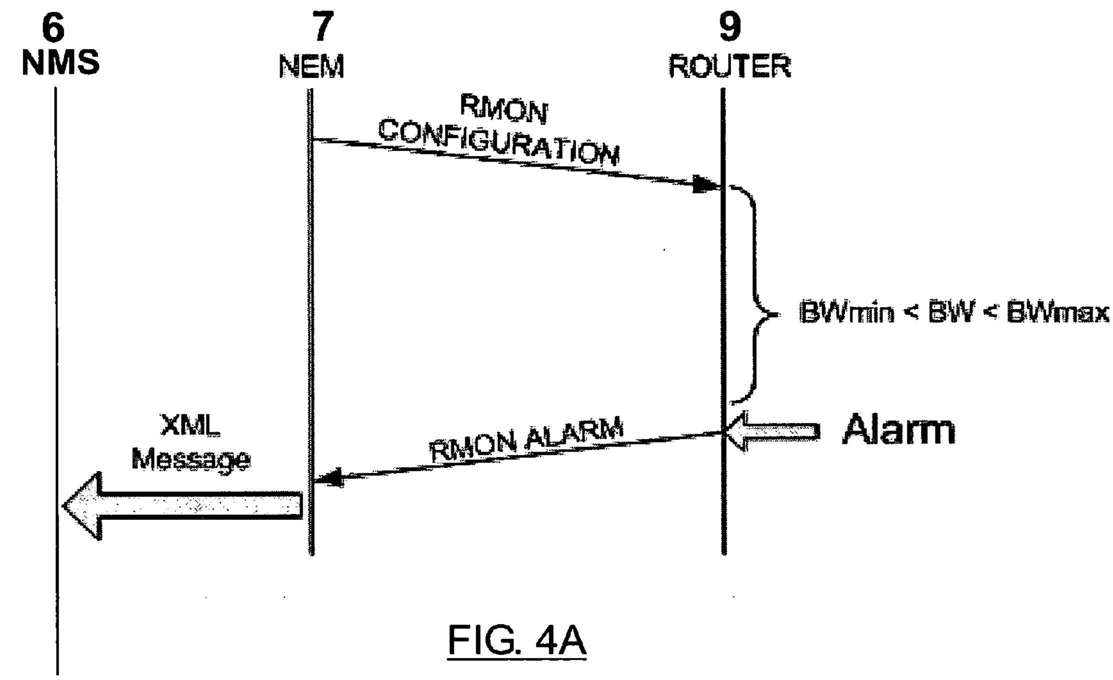
6
NMS
7
NEM
9
ROUTER
RMON
CONFIGURATION
BWmin < BW < BWmax
XML
Message
RMON ALARM
Alarm

FIG. 4A

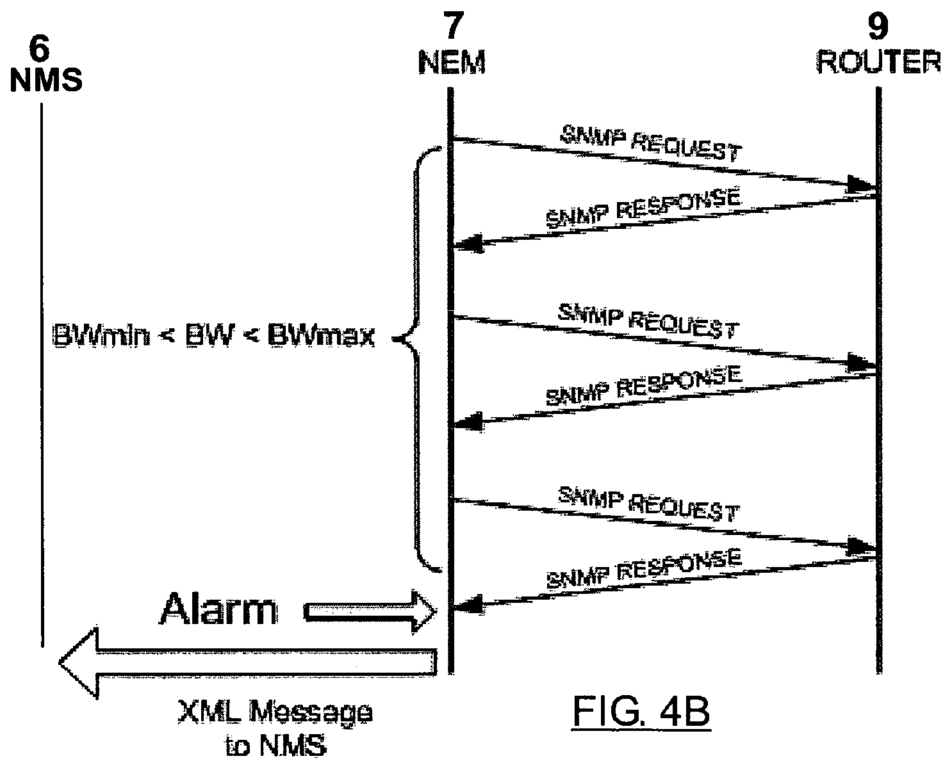
6
NMS
7
NEM
9
ROUTER
SNMP REQUEST
SNMP RESPONSE
BWmin < BW < BWmax
SNMP REQUEST
SNMP RESPONSE
SNMP REQUEST
SNMP RESPONSE
Alarm
XML Message
to NMS

FIG. 4B

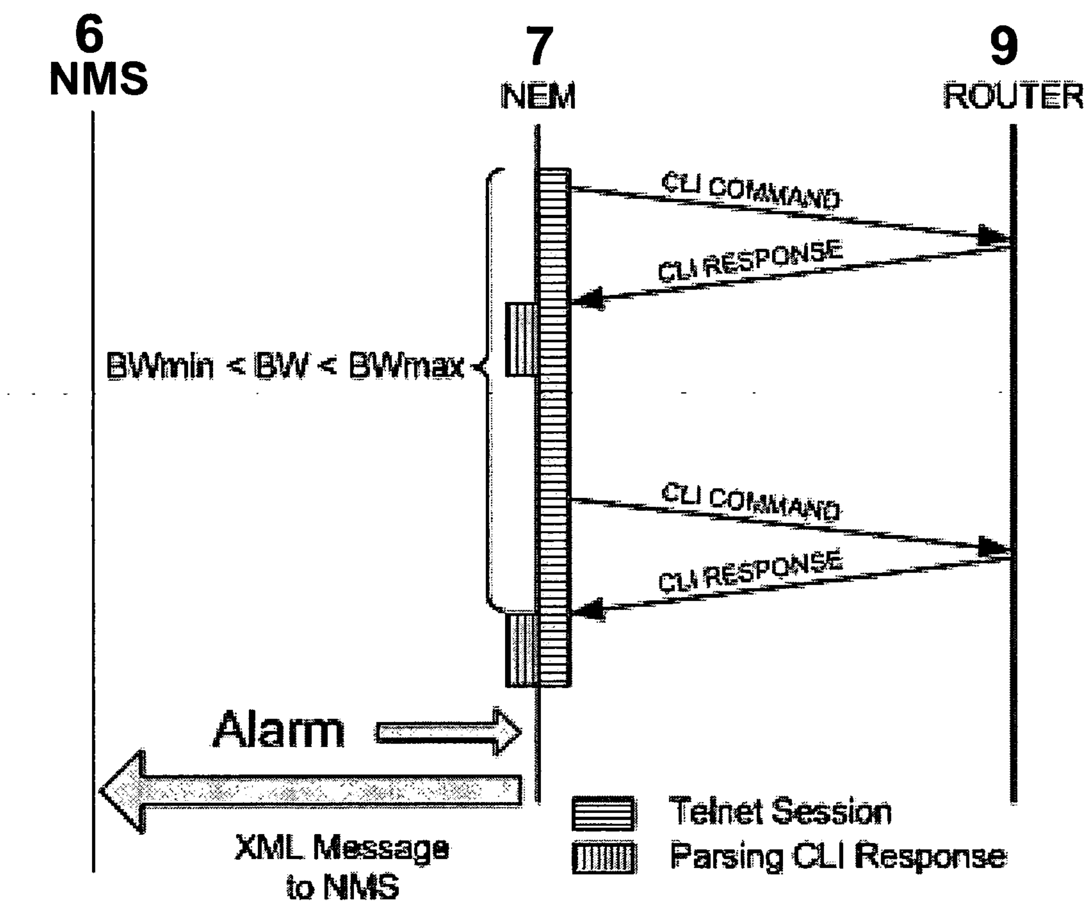
6
NMS
7
NEM
9
ROUTER
CLI COMMAND
CLI RESPONSE
BWmin < BW < BWmax
CLI COMMAND
CLI RESPONSE
Alarm
XML Message
to NMS
Telnet Session
Parsing CLI Response

FIG. 4C

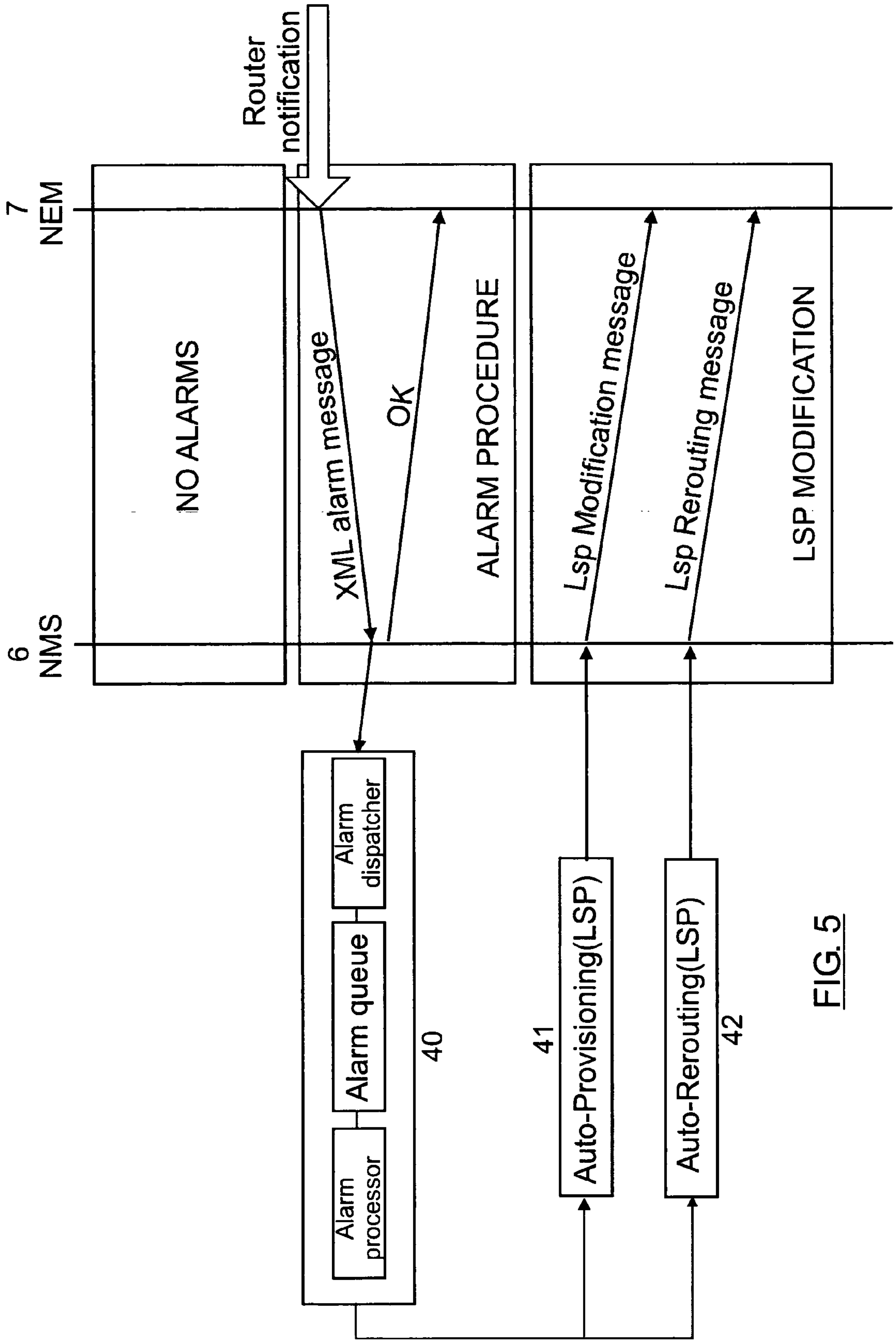
Router notification
7
NEM
6
NMS
NO ALARMS
XML alarm message
OK
ALARM PROCEDURE
Lsp Modification message
Lsp Rerouting message
LSP MODIFICATION
Alarm processor
Alarm queue
Alarm dispatcher
40
41
Auto-Provisioning(LSP)
42
Auto-Rerouting(LSP)

FIG. 5

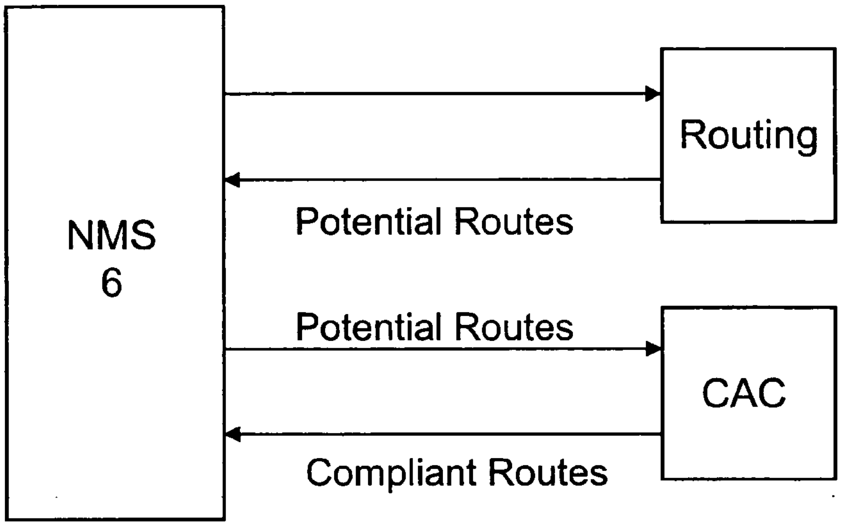
NMS
6
Routing
Potential Routes
Potential Routes
CAC
Compliant Routes

FIG. 6A

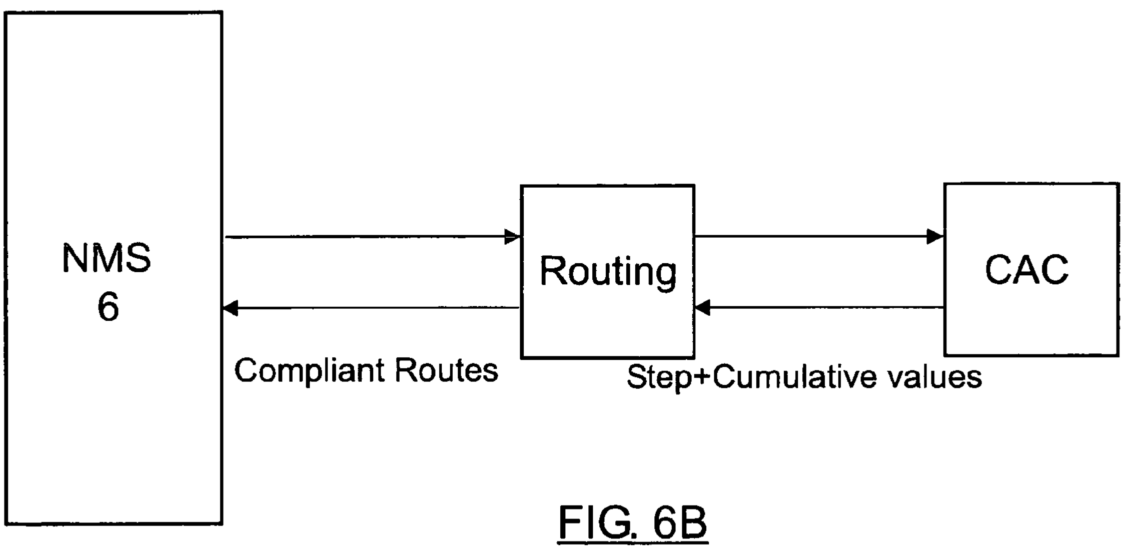
NMS
6
Routing
CAC
Compliant Routes
Step+Cumulative values

FIG. 6B

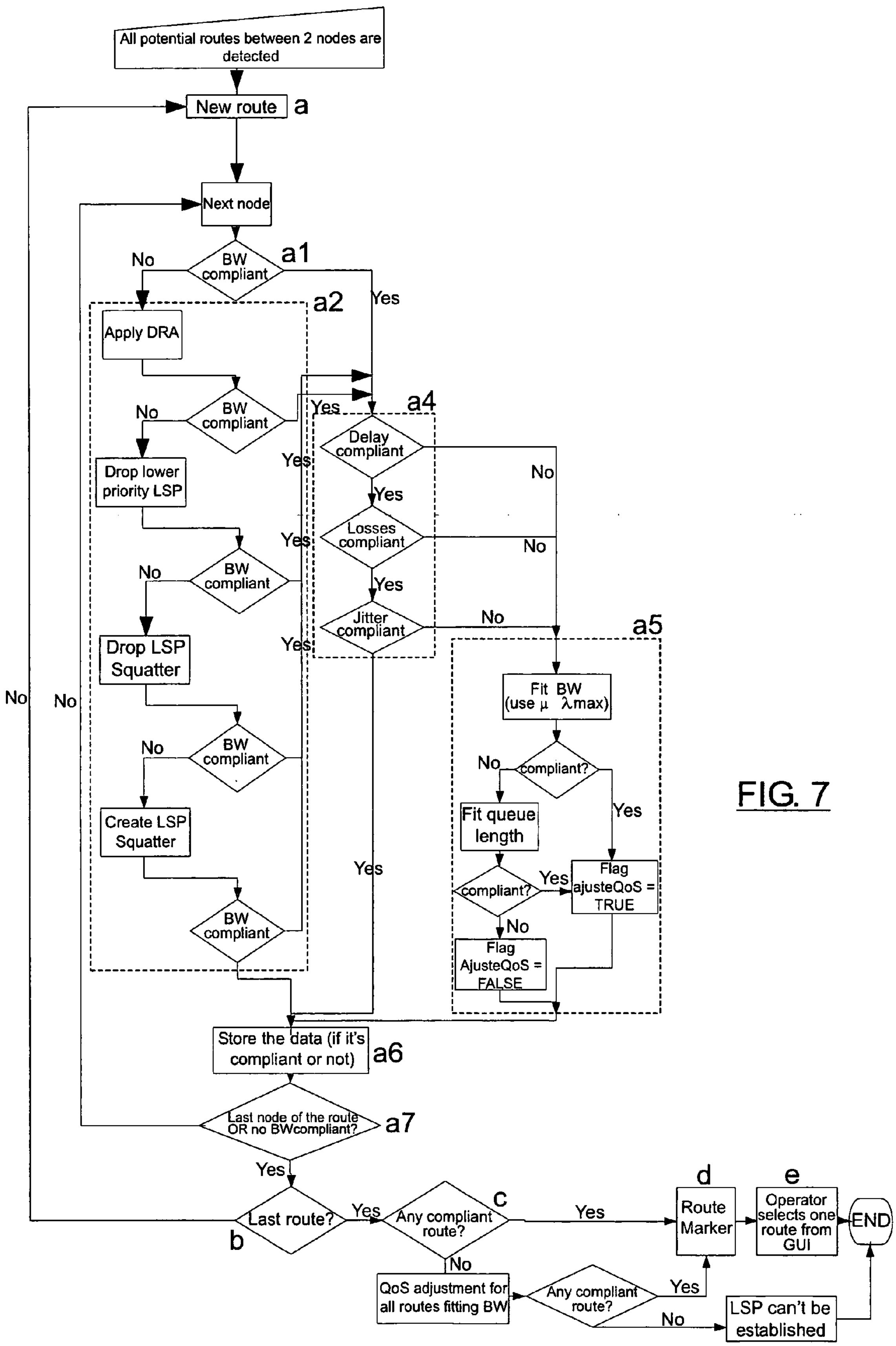
All potential routes between 2 nodes are detected
New route
a
Next node
BW compliant
a1
No
Yes
a2
Apply DRA
BW compliant
No
Yes
Drop lower priority LSP
BW compliant
Drop LSP Squatter
BW compliant
Create LSP Squatter
BW compliant
a4
Delay compliant
Losses compliant
Jitter compliant
a5
Fit BW (use μ λmax)
compliant?
Fit queue length
compliant?
Flag ajusteQoS = TRUE
Flag AjusteQoS = FALSE
Store the data (if it's compliant or not)
a6
Last node of the route OR no BWcompliant?
a7
Last route?
b
Any compliant route?
c
Route Marker
d
Operator selects one route from GUI
e
END
QoS adjustment for all routes fitting BW
Any compliant route?
LSP can't be established

FIG. 7

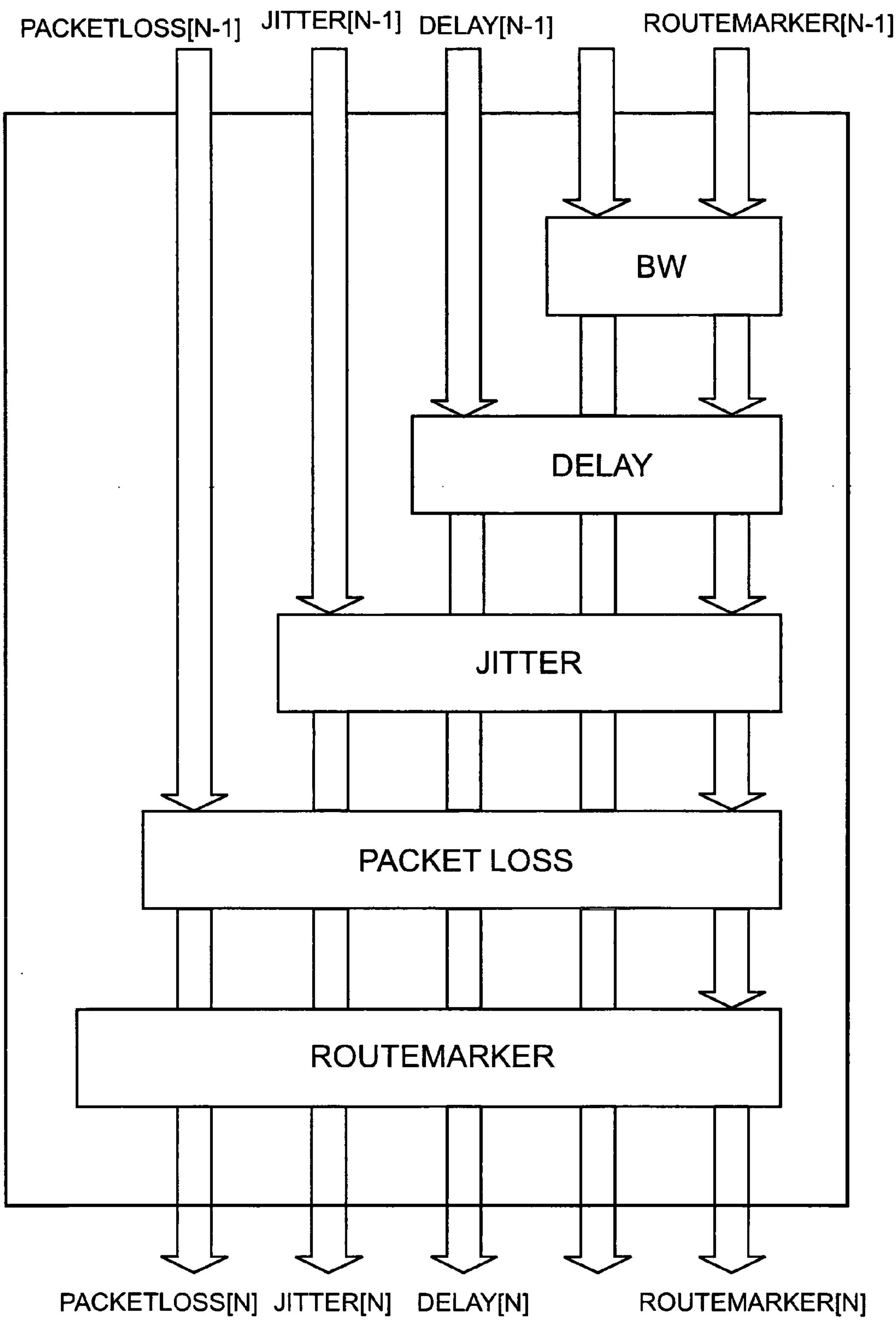
PACKETLOSS[N-1]
JITTER[N-1]
DELAY[N-1]
ROUTEMARKER[N-1]
BW
DELAY
JITTER
PACKET LOSS
ROUTEMARKER
PACKETLOSS[N]
JITTER[N]
DELAY[N]
ROUTEMARKER[N]

FIG. 8

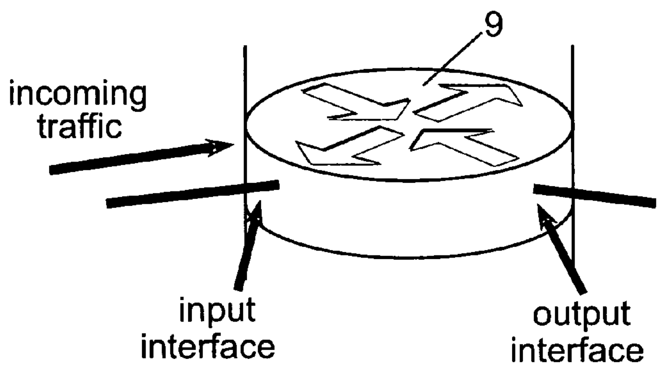
9
incoming traffic
input interface
output interface

FIG. 9A

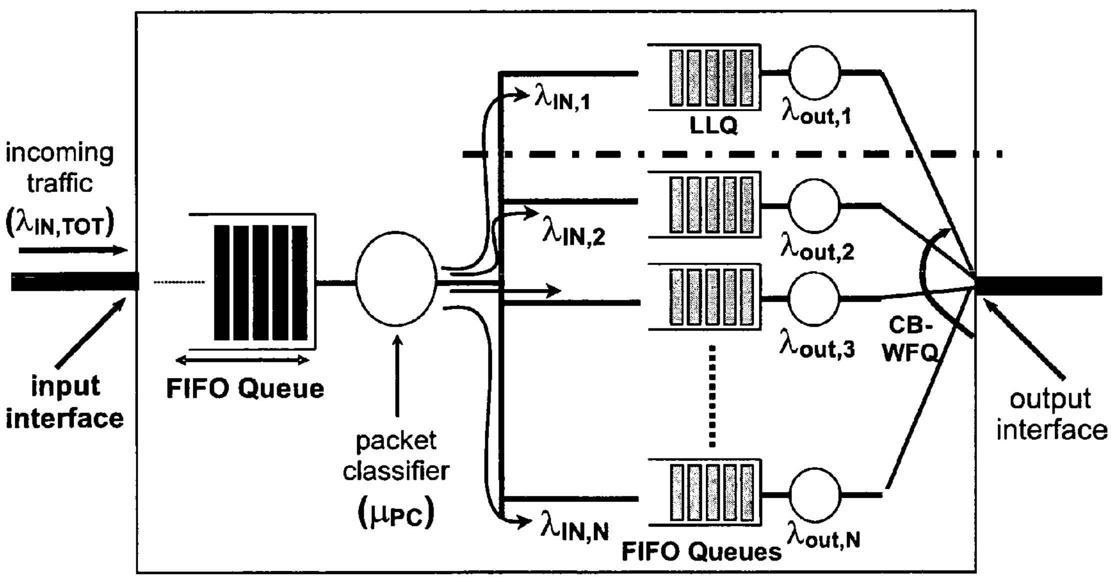
incoming traffic
($\lambda_{IN,TOT}$)
input interface
FIFO Queue
packet classifier
($\mu_{PC}$)
$\lambda_{IN,1}$
$\lambda_{IN,2}$
$\lambda_{IN,N}$
LLQ
FIFO Queues
$\lambda_{out,1}$
$\lambda_{out,2}$
$\lambda_{out,3}$
$\lambda_{out,N}$
CB-WFQ
output interface

FIG. 9B

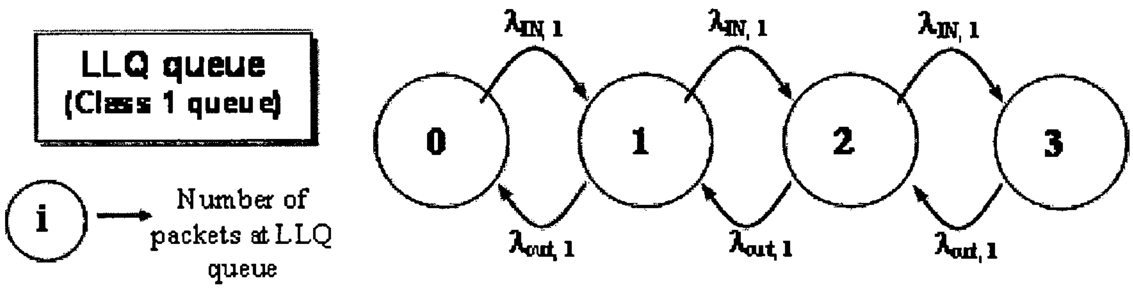


FIG. 10A

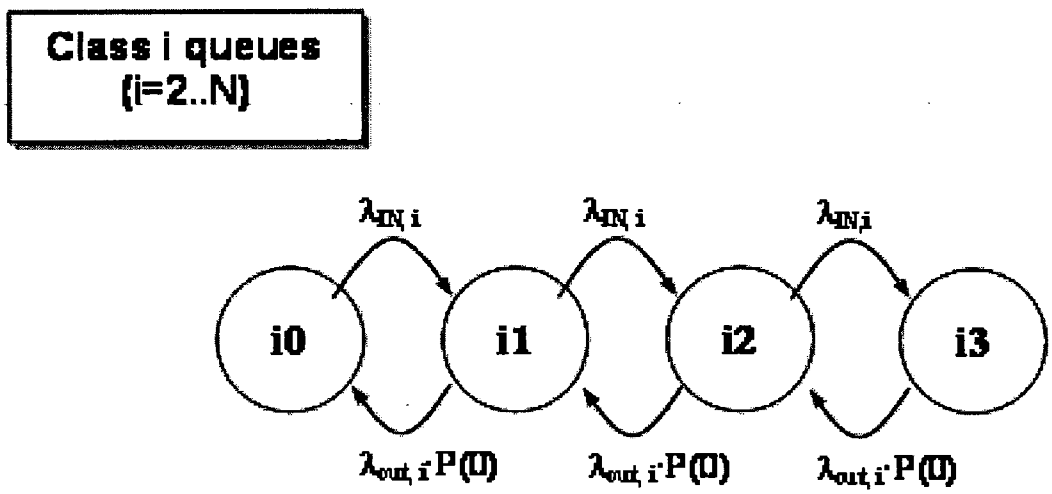


FIG. 10B

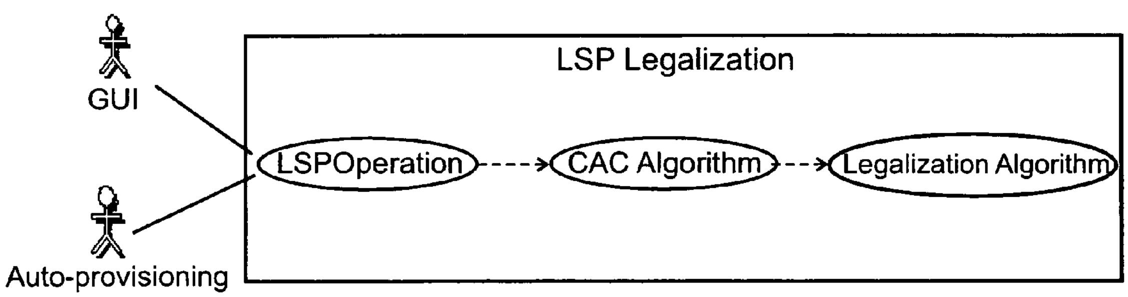


FIG. 11

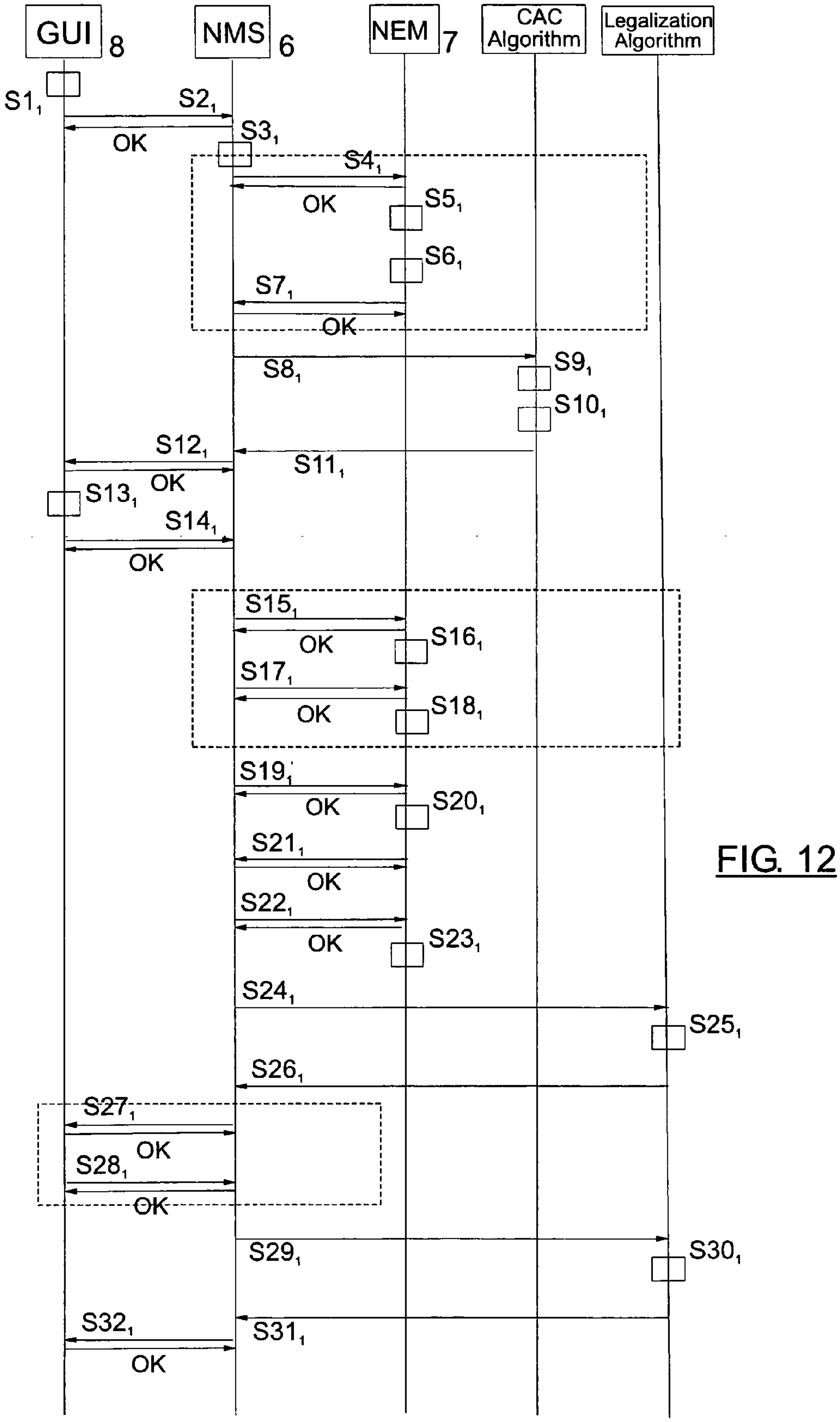
GUI 8
NMS 6
NEM 7
CAC Algorithm
Legalization Algorithm
S1₁
S2₁
OK
S3₁
S4₁
OK
S5₁
S6₁
S7₁
OK
S8₁
S9₁
S10₁
S12₁
S11₁
OK
S13₁
S14₁
OK
S15₁
OK
S16₁
S17₁
OK
S18₁
S19₁
OK
S20₁
S21₁
OK
S22₁
OK
S23₁
S24₁
S25₁
S26₁
S27₁
OK
S28₁
OK
S29₁
S30₁
S32₁
S31₁
OK

FIG. 12

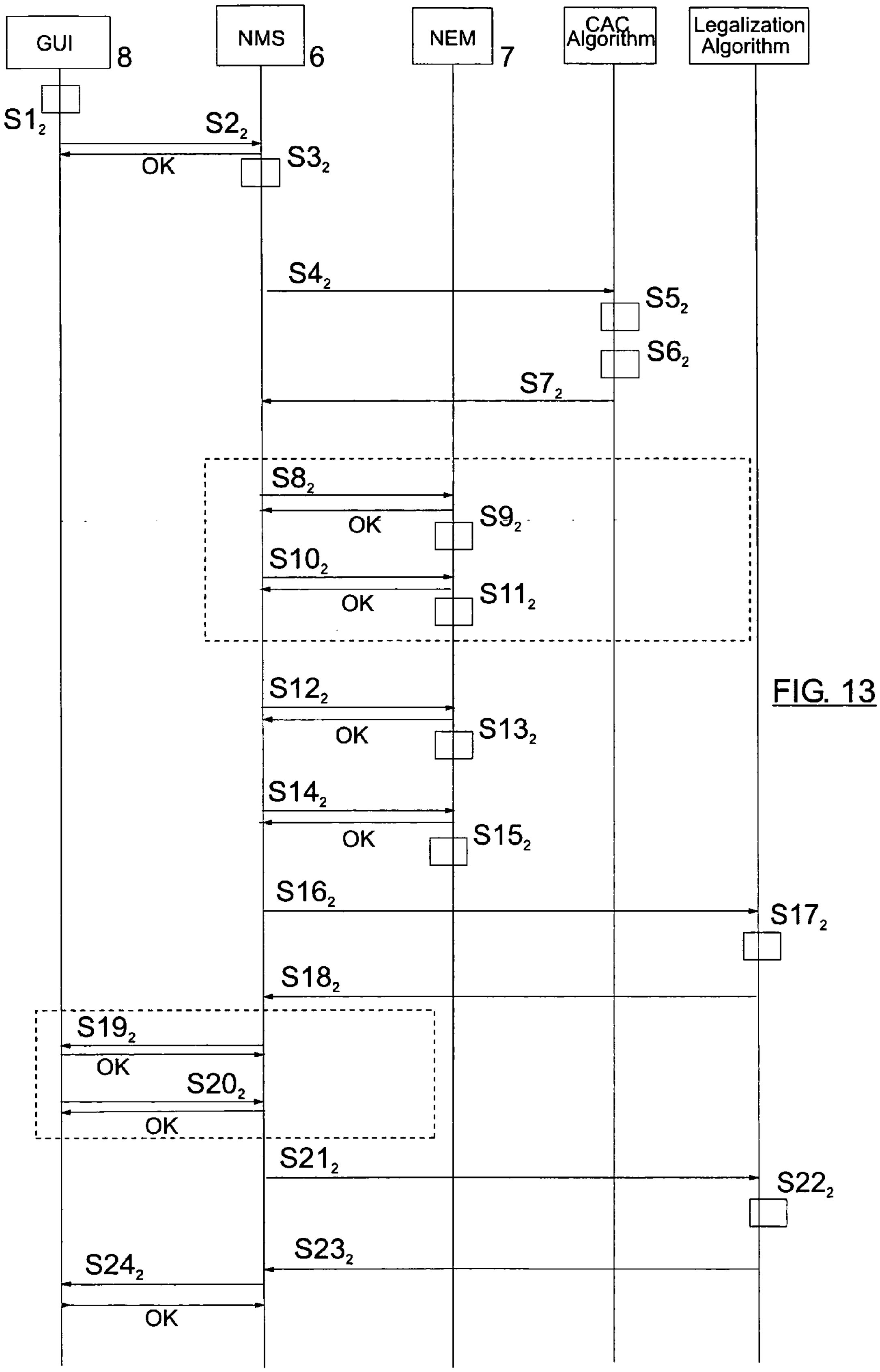
GUI
8
NMS
6
NEM
7
CAC Algorithm
Legalization Algorithm
S1₂
S2₂
OK
S3₂
S4₂
S5₂
S6₂
S7₂
S8₂
OK
S9₂
S10₂
OK
S11₂
S12₂
OK
S13₂
S14₂
OK
S15₂
S16₂
S17₂
S18₂
S19₂
OK
S20₂
OK
S21₂
S22₂
S23₂
S24₂
OK

FIG. 13

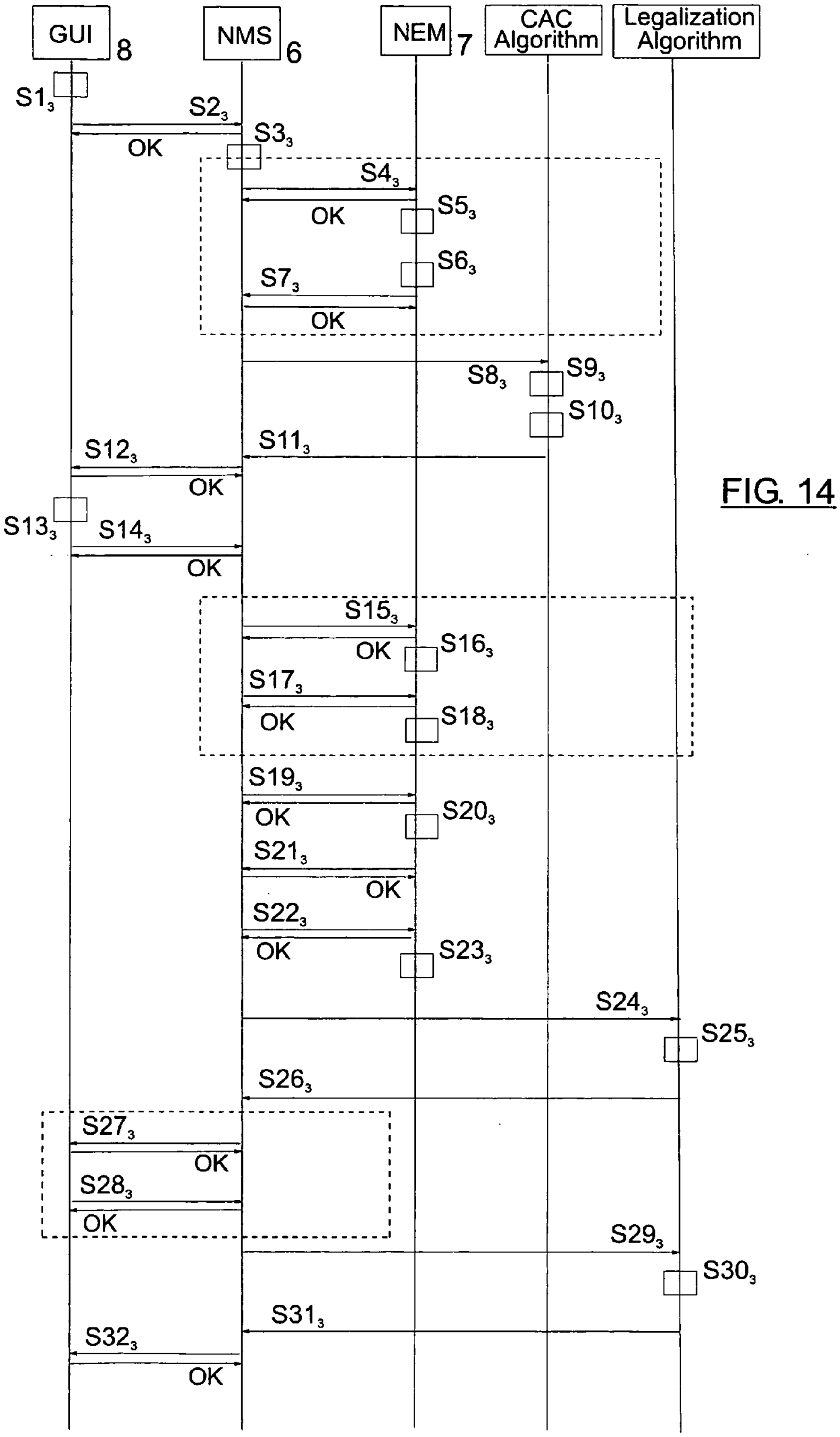
GUI 8
NMS 6
NEM 7
CAC Algorithm
Legalization Algorithm
S1₃
S2₃
OK
S3₃
S4₃
OK
S5₃
S6₃
S7₃
OK
S8₃
S9₃
S10₃
S11₃
S12₃
OK
S13₃
S14₃
OK
S15₃
OK
S16₃
S17₃
OK
S18₃
S19₃
OK
S20₃
S21₃
OK
S22₃
OK
S23₃
S24₃
S25₃
S26₃
S27₃
OK
S28₃
OK
S29₃
S30₃
S31₃
S32₃
OK

FIG. 14

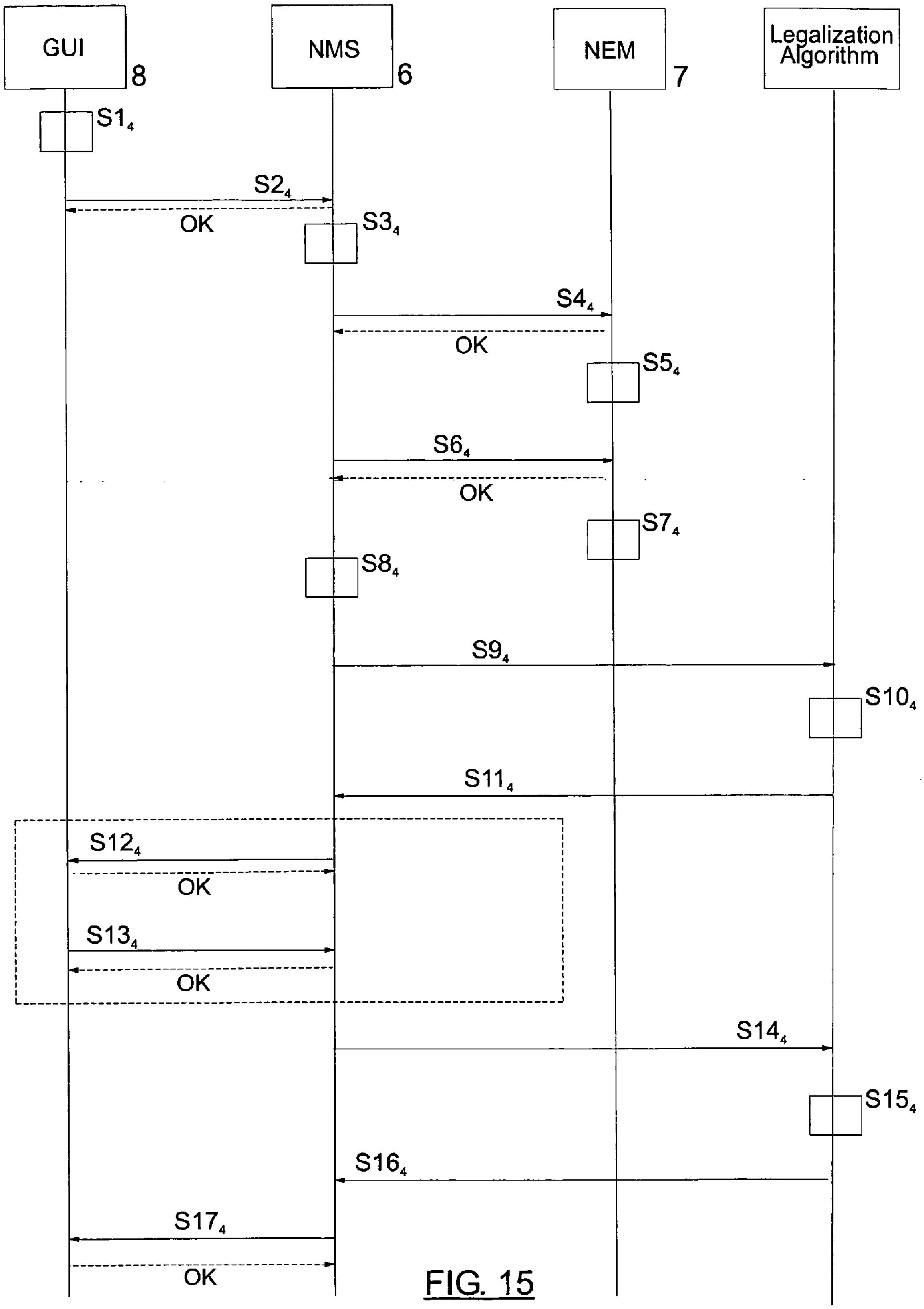
GUI
8
NMS
6
NEM
7
Legalization Algorithm
S1₄
S2₄
OK
S3₄
S4₄
OK
S5₄
S6₄
OK
S7₄
S8₄
S9₄
S10₄
S11₄
S12₄
OK
S13₄
OK
S14₄
S15₄
S16₄
S17₄
OK

FIG. 15

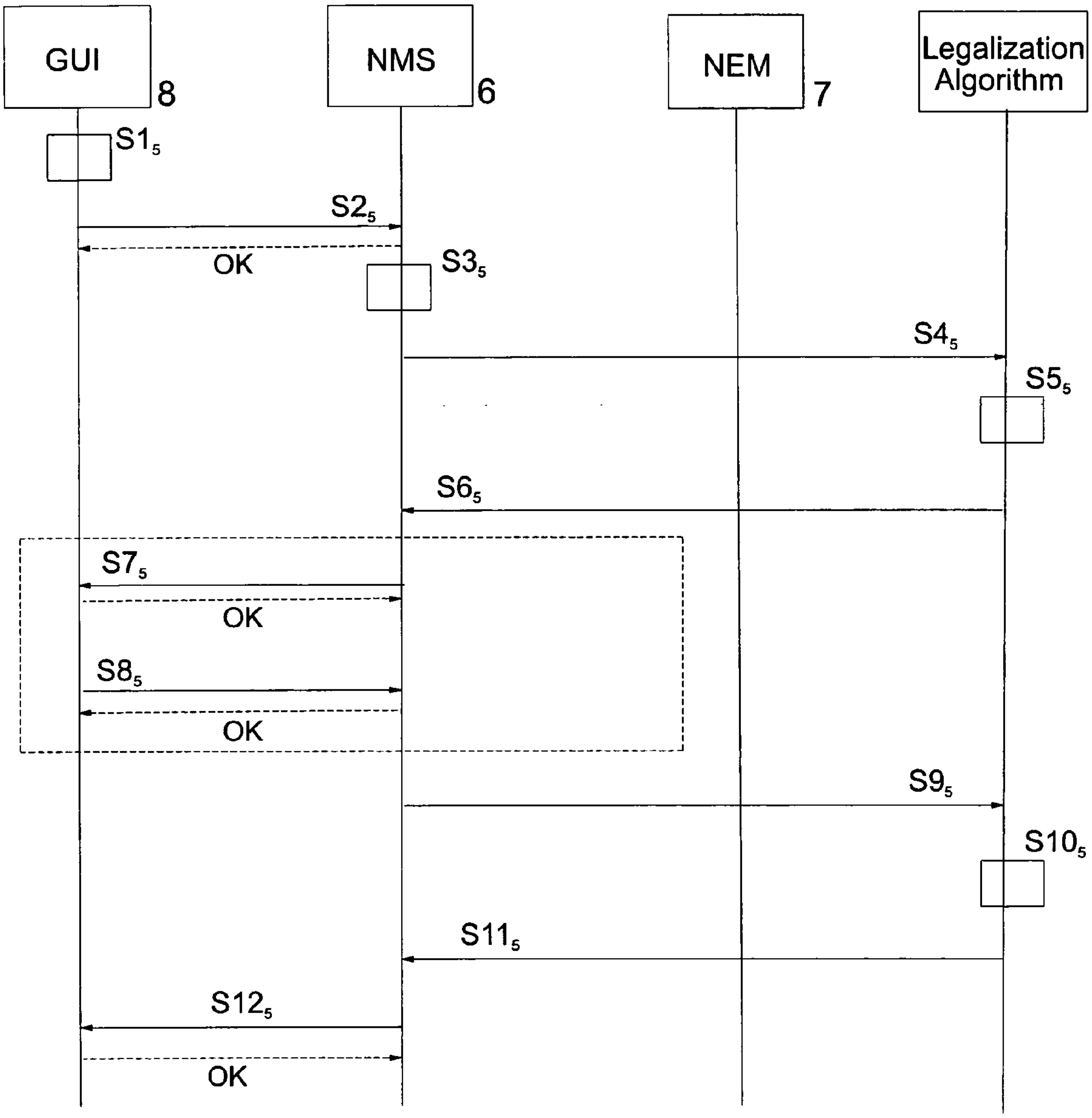
GUI
8
NMS
6
NEM
7
Legalization Algorithm
S1₅
S2₅
OK
S3₅
S4₅
S5₅
S6₅
S7₅
OK
S8₅
OK
S9₅
S10₅
S11₅
S12₅
OK

FIG. 16

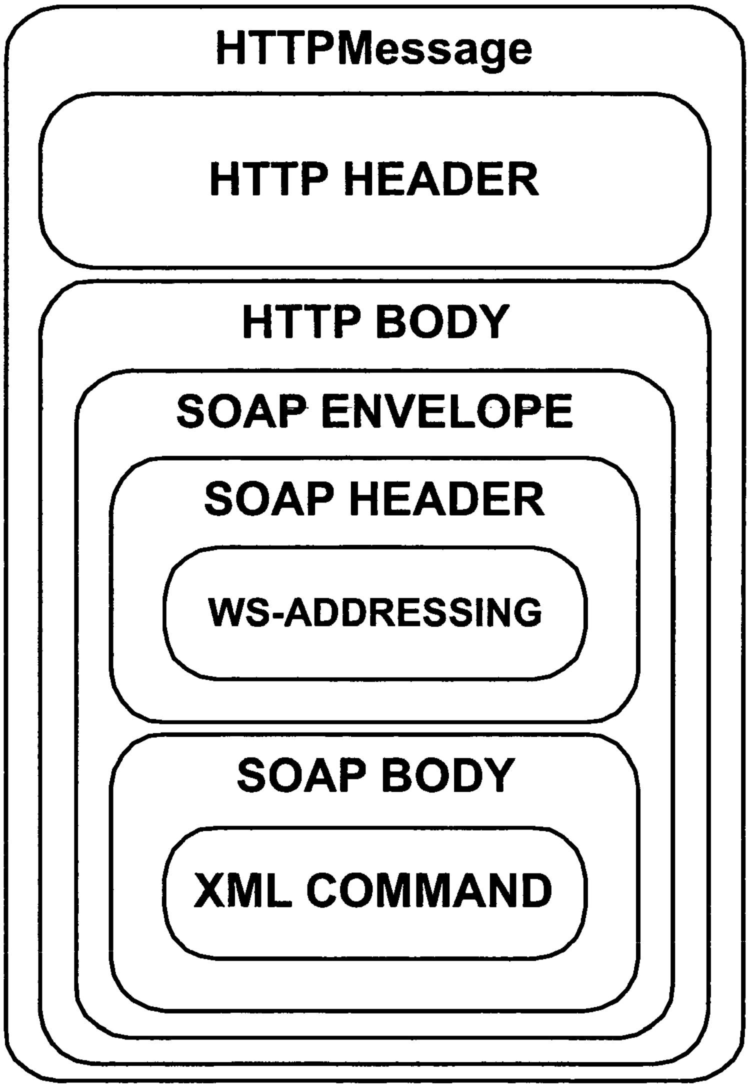
HTTPMessage
HTTP HEADER
HTTP BODY
SOAP ENVELOPE
SOAP HEADER
WS-ADDRESSING
SOAP BODY
XML COMMAND

FIG. 17

Europäisches Patentamt
European Patent Office
Office européen des brevets

# EUROPEAN SEARCH REPORT

Application Number
EP 08 38 0117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANJALI, TRICHA: "DiffServ/MPLS Network Design Management" THESIS, [Online] 30 March 2004 (2004-03-30), XP002522194 Retrieved from the Internet: URL:http://etd.gatech.edu/theses/available/etd-03242004-155233/unrestricted/anjali_tricha_200405_phd.pdf> [retrieved on 2009-03-31] * paragraphs [0001] - [0003] * | 1-6 | INV. H04L12/24 H04L12/26 H04L12/56 |
| X | DATABASE INSPEC [Online] THE INSTITUTION OF ELECTRICAL ENGINEERS, STEVENAGE, GB; 2003, THOTTAN M K ET AL: "SEQUIN: an SNMP-based MPLS network monitoring system" XP009114783 Database accession no. 7886383 * the whole document * & Bell Labs Technical Journal Lucent Technologies USA, vol. 8, no. 1, 2003, pages 95-111, ISSN: 1089-7089 | 1-6 | TECHNICAL FIELDS SEARCHED (IPC) H04L |
| A | THOMAS D NADEAU CISCO SYSTEMS ET AL: "Diff-Serv-aware MPLS Traffic Engineering Network Management Information Base Using SMIv2; draft-nadeau-mpls-dste-mib-01.txt" IETF STANDARD-WORKING-DRAFT, INTERNET ENGINEERING TASK FORCE, IETF, CH, no. 1, 1 March 2003 (2003-03-01), XP015004520 ISSN: 0000-0004 * paragraphs [0001] - [06.5] * | 1-6 | |

~~The present search report has been drawn up for all claims~~

3

| Place of search | Date of completion of the search | Examiner |
|---|---|---|
| Munich | 2 April 2009 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 08 38 0117

## CLAIMS INCURRING FEES

The present European patent application comprised at the time of filing claims for which payment was due.

- [ ] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

- [ ] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [X] None of the further search fees have been paid within the fixed time limit. The present European search report has been drawn up for those parts of the European patent application which relate to the invention first mentioned in the claims, namely claims:

  1 - 6

- [ ] The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number

EP 08 38 0117

The Search Division considers that the present European patent application does not comply with the requirements of unity of invention and relates to several inventions or groups of inventions, namely:

1. claims: 1-6

   System and method in MPLS-Diffserv networks for monitoring bandwidth used in each LSP class and alariming the network management system for actions

   ---

2. claims: 7-11

   Method in a MPLS-Diffserv network for evaluating the best route based on nodes characteristics evaluation.

   ---

3. claim: 12

   Process for characterising LSP in a MPLS-Diffserv network based LSP weighted parameters.

   ---